(19) Europäisches Patentamt
European Patent Office
Office européen des brevets

(11) **EP 4 432 128 A1**

(12) **EUROPEAN PATENT APPLICATION**
published in accordance with Art. 153(4) EPC

(43) Date of publication:
**18.09.2024 Bulletin 2024/38**

(21) Application number: **23862051.2**

(22) Date of filing: **18.07.2023**

(51) International Patent Classification (IPC):
*G06F 16/583* (2019.01)      *G06F 16/538* (2019.01)
*G06F 16/532* (2019.01)      *G06V 10/40* (2022.01)
*G06V 10/74* (2022.01)       *G06V 10/774* (2022.01)

(52) Cooperative Patent Classification (CPC):
G06F 16/532; G06F 16/538; G06F 16/55;
G06F 16/583; G06V 10/40; G06V 10/44;
G06V 10/74; G06V 10/761; G06V 10/774;
G06V 10/82

(86) International application number:
**PCT/CN2023/107962**

(87) International publication number:
**WO 2024/051350 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.09.2022 CN 202211089620**

(71) Applicant: **Tencent Technology (Shenzhen)
Company Limited
Shenzhen, Guangdong 518057 (CN)**

(72) Inventors:
• **SHU, Xiujun**
  **Shenzhen, Guangdong 518057 (CN)**
• **WEN, Wei**
  **Shenzhen, Guangdong 518057 (CN)**
• **QIAO, Ruizhi**
  **Shenzhen, Guangdong 518057 (CN)**

(74) Representative: **EP&C
P.O. Box 3241
2280 GE Rijswijk (NL)**

(54) **IMAGE RETRIEVAL METHOD AND APPARATUS, AND ELECTRONIC DEVICE AND STORAGE MEDIUM**

(57)     An image retrieval method and apparatus, and an electronic device and a storage medium. The image retrieval method comprises: acquiring a candidate image set, and data to be retrieved of a plurality of modalities, wherein the candidate image set comprises a plurality of candidate images; performing feature extraction on said data on the basis of a target model, so as to obtain a first feature of said data; performing feature extraction on the candidate images multiple times on the basis of the target model, so as to obtain a second feature after the candidate images are aligned with said data of the plurality of modalities; determining a first similarity between each candidate image and each piece of said data of the plurality modalities according to the first feature and the second feature; determining, according to the first similarity and from the candidate image set, a plurality of result image sets corresponding to a retrieval data combination, wherein the retrieval data combination comprises data to be retrieved of at least one modality; and merging the plurality of result image sets, so as to obtain an image retrieval result.

FIG. 2

**Description**

RELATED APPLICATION

This disclosure is proposed based on and claims priority to Chinese Patent Application No. 202211089620.8, filed on September 7, 2022.

FIELD OF THE TECHNOLOGY

This disclosure relates to the field of artificial intelligence technologies, and in particular, to an image query method and apparatus, an electronic device, and a storage medium.

BACKGROUND OF THE DISCLOSURE

With the rapid development of Internet technologies, image query is widely applied to a plurality of scenarios. In the related art, image query is generally performed based on inputted query data. The query data is generally an image, that is, such an image query manner is essentially image searching based on images. Specifically, an image similar to an inputted search image is retrieved from an image database. However, the image query method cannot be generalized for other types of query data, and image query accuracy needs to be improved.

SUMMARY

The following is the summary of the subject matter detailed in this disclosure. The summary is not intended to limit the scope of the claims.

Embodiments of this disclosure provide an image query method and apparatus, an electronic device, and a storage medium, which can improve image query accuracy.

According to an aspect, an embodiment of this disclosure provides an image query method, including:

obtaining a candidate image set and query data in a plurality of modalities, the candidate image set comprising a plurality of candidate images;

performing feature extraction on the query data based on a target model, to obtain a plurality of first features respectively in the plurality of modalities;

for each of the plurality of candidate images,

performing feature extraction on the respective candidate image based on the target model, to obtain a plurality of second features when the respective candidate image is aligned with the query data respectively in the plurality of modalities;

determining a plurality of first similarities between the respective candidate image and the query data according to the plurality of first features and the plurality of second features respectively in the plurality of modalities;

determining a plurality of query data combinations, each of the plurality of query data combinations comprising query data in at least one modality;

for the each query data combination, determining, from the candidate image set, a target image set according to the plurality of first similarities, the target image set comprising at least one target image; and

merging a plurality of target image sets to obtain an image query result.

According to another aspect, an embodiment of this disclosure provides an image query apparatus, including:

a data obtaining module, configured to obtain a candidate image set and query data in a plurality of modalities, the candidate image set comprising a plurality of candidate images;

a model processing module, configured to perform feature extraction on the query data based on a target model, to obtain a plurality of first features respectively in the plurality of modalities; for each of the plurality of candidate images, perform feature extraction on the respective candidate image based on the target model, to obtain a plurality of second features when the respective candidate image is aligned with the query data respectively in the plurality of modalities;

a query module, configured to for each of the plurality of candidate images, determine a plurality of first similarities between the respective candidate image and the query data according to the plurality of first features and the plurality of second features respectively in the plurality of modalities; determine a plurality of query data combinations, each of the plurality of query data combinations comprising query data in at least one modality; for the each query data combination, determine, from the candidate image set, a target image set according to the plurality of first similarities, the target image set comprising at least one target image; and

a merging module, configured to merge a plurality of target image sets to obtain an image query result.

According to another aspect, an embodiment of this disclosure further provides an electronic device, including a memory and a processor, the memory storing a computer program, and the processor executes the computer program to implement the image query method.

According to still another aspect, an embodiment of this disclosure further provides a computer-readable storage medium, the storage medium storing a computer program, the computer program, when executed by a processor, implementing the image query method.

According to yet another aspect, an embodiment of this disclosure further provides a computer program product, the computer program product including a computer program, the computer program being stored in a computer-readable storage medium. A processor of a computer device reads the computer program from the computer-readable storage medium, and the processor executes the computer program, to enable the computer device to perform the image query method.

The embodiments of this disclosure include at least the following beneficial effects: The electronic device performs feature extraction on the query data through the target model to obtain a first feature of the query data, and then performs feature extraction on the candidate image through the same target model for a plurality of times to obtain a second feature of the candidate image when the candidate image is aligned with query data in each modality, which can improve image query accuracy by using query data in a plurality of modalities, and unify feature frameworks of the query data in the plurality of modalities and the candidate image, thereby improving feature space consistency between the first feature and the second feature. Moreover, the electronic device determines the first feature and the second feature by using the same target model, which can reduce a quantity of parameters of the target model, and reduce memory overheads for deploying the target model. In addition, only the same target model needs to be trained in a training stage, which improves model training efficiency. Based on the above, the electronic device determines a first similarity between the candidate image and query data in each modality according to the first feature and the second feature, and the electronic device determines target image sets corresponding to a plurality of query data combinations from the candidate image set according to the first similarity, and merges a plurality of target image sets to obtain an image query result. In this way, there is no need to retrieve the query data and the candidate images in a one-to-one manner, so that image query efficiency is effectively improved. In addition, the image query result is obtained based on the target image sets corresponding to the plurality of query data combinations, which can effectively improve image query accuracy.

Other features and advantages of this disclosure will be described in the subsequent specification, and partially become apparent from the specification, or be understood by implementing this disclosure.

BRIEF DESCRIPTION OF THE DRAWINGS

The accompanying drawings are used to provide further understanding of the technical solutions of this disclosure, and constitute a part of the specification, which are used to explain the technical solutions of this disclosure in combination with the embodiments of this disclosure, and do not constitute a limitation to the technical solutions of this disclosure.

FIG. 1 is a schematic diagram of an optional implementation environment according to an embodiment of this disclosure.

FIG. 2 is an optional schematic flowchart of an image query method according to an embodiment of this disclosure.

FIG. 3 is an optional schematic structural diagram of a target model according to an embodiment of this disclosure.

FIG. 4 is an optional schematic flowchart of obtaining an image query result based on a plurality of query data combinations according to an embodiment of this disclosure.

FIG. 5 is another optional schematic structural diagram of a target model according to an embodiment of this disclosure.

FIG. 6 is an optional schematic diagram of a training process of a target model according to an embodiment of this disclosure.

FIG. 7 is an optional schematic flowchart of expanding a training sample according to an embodiment of this disclosure.

FIG. 8 is an optional schematic diagram of an overall architecture of a target model according to an embodiment of this disclosure.

FIG. 9 is another optional schematic diagram of an overall architecture of a target model according to an embodiment of this disclosure.

FIG. 10 is still another optional schematic diagram of an overall architecture of a target model according to an embodiment of this disclosure.

FIG. 11 is yet another optional schematic diagram of an overall architecture of a target model according to an embodiment of this disclosure.

FIG. 12 is a schematic flowchart of performing image query by using a search engine according to an embodiment of this disclosure.

FIG. 13 is a schematic flowchart of performing image query on a photo application according to an embodiment of this disclosure.

FIG. 14 is an optional schematic structural diagram of an image query apparatus according to an embodiment of this disclosure.

FIG. 15 is a block diagram of a structure of a part of a terminal according to an embodiment of this disclosure.

FIG. 16 is a block diagram of a structure of a part of a server according to an embodiment of this disclosure.

## DESCRIPTION OF EMBODIMENTS

To make the objectives, technical solutions, and advantages of this disclosure clearer, the following further describes this disclosure in detail with reference to the accompanying drawings and the embodiments. It is to be understood that specific embodiments described herein are merely used to describe this disclosure, but are not intended to limit this disclosure.

In specific implementations of this disclosure, permission or consent of a target object may be first obtained when related processing needs to be performed according to data related to a target object characteristic, for example, target object attribute information, an attribute information set, or the like. In addition, acquisition, use, and processing of the data comply with the relevant laws and standards of the relevant countries and regions. The target object may be a user. In addition, in the embodiments of this disclosure, when the target object attribute information needs to be obtained, individual permission or consent of the target object may be obtained in a manner of displaying a pop-up window, jumping to a confirmation page, or the like. After it is determined that individual permission or consent of the target object is obtained, necessary target object-related data for normal operation in the embodiments of this disclosure is obtained.

In the related art, image query is generally performed based on inputted query data. The query data is generally an image, that is, such an image query manner is essentially image searching based on images. Specifically, an image similar to an inputted search image may be retrieved from an image database. However, the image query method cannot be generalized for other types of query data, and image query accuracy needs to be improved.

In view of this, the embodiments of this disclosure provide an image query method and apparatus, an electronic device, and a storage medium, which can improve image query accuracy.

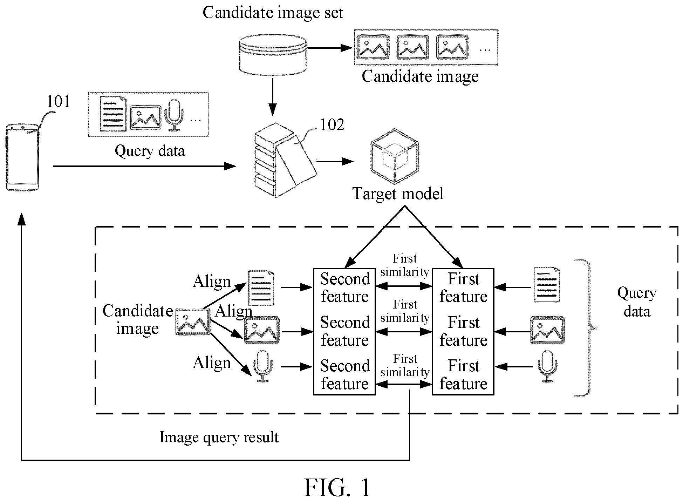

Refer to FIG. 1. FIG. 1 is a schematic diagram of an optional implementation environment according to an embodiment of this disclosure. The implementation environment includes a terminal 101 and a server 102. The terminal 101 and the server 102 are connected to each other through a communication network.

The server 102 may be an independent physical server, or may be a server cluster or a distributed system formed by a plurality of physical servers, or may be a cloud server that provides a basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform. In addition, the server 102 may further be a node server in a blockchain network.

The terminal 101 may be a smartphone, a tablet computer, a notebook computer, a desktop computer, a smart speaker, a smart watch, an in-vehicle terminal, or the like, but is not limited thereto. The terminal 101 and the server 102 may be directly or indirectly connected in a wired or wireless communication manner. This is not limited in this embodiment of this disclosure.

For example, the terminal 101 may send query data in a plurality of modalities to the server 102. The server 102 receives the query data and obtains a pre-stored candidate image set, performs feature extraction on the query data based on a target model to obtain a first feature of the query data, performs feature extraction on a candidate image based on the target model for a plurality of times to obtain a second feature of the candidate image when the candidate image is aligned with query data in each modality, determines a first similarity between the candidate image and query data in each modality according to the first feature and the second feature, determines target image sets respectively corresponding to a plurality of query data combinations from the candidate image set according to a plurality of first similarities, merges a plurality of target image sets to obtain an image query result, and sends the image query result to the terminal 101. The terminal 101 displays the image query result. The server 102 performs feature extraction on the query data through the target model to obtain a first feature of the query data, and then performs feature extraction on the candidate image through the same target model for a plurality of times to obtain a second feature of the candidate image when the candidate image is aligned with query data in each modality, which can improve image query accuracy by using query data in a plurality of modalities, and unify feature frameworks of the query data in the plurality of modalities and the candidate image, thereby improving feature space consistency between the first feature and the second feature. Moreover, the server determines the first feature and the second feature by using the same target model, which can reduce a quantity of parameters of the target model, and reduce memory overheads for deploying the target model. In addition, only the same target model needs to be trained in a training stage, which improves model training efficiency. Based on the above, the server determines a first similarity between the candidate image and query data in each modality according to the first feature and the second feature, determines target image sets respectively corresponding to a plurality of query data combinations from the candidate image set according to the first similarity, and merges a plurality of target image sets to obtain an image query result. In this way, there is no need to compare the query data and the candidate images in a one-to-one manner, so that image query efficiency is effectively improved. In addition, the image query result is obtained based on the target image sets corresponding to the plurality of query data combinations, which can effectively improve image query accuracy.

The method provided in the embodiments of this disclosure is applicable to various technical fields, including but not limited to technical fields such as the cloud technology, artificial intelligence, and the like.

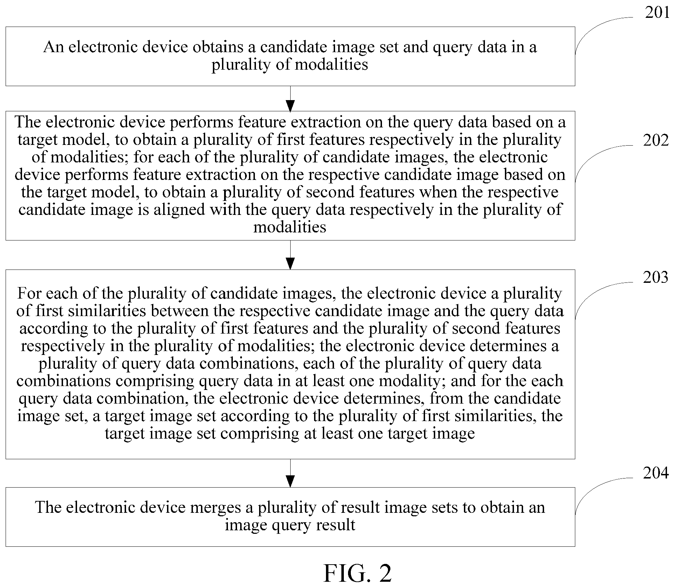

Refer to FIG. 2. FIG. 2 is an optional schematic flowchart of an image query method according to an embodiment of this disclosure. The image query method may be performed by a server, or may be performed by a terminal, or may be jointly performed by a server and a terminal through cooperation. The image query method includes but is not limited to step 201 to step 204 below.

Step 201: An electronic device obtains a candidate image set and query data in a plurality of modalities.

The candidate image set includes a plurality of candidate images, the candidate image is an image in a query database. An image query result is generated based on the candidate image set. The query data is obtained during image query. The modality is configured for indicating an existence form of the query data. The modality may be an image modality, a text modality, a voice modality, or the like. The query data in the image modality is a query image ("query image"), the query data in the text modality is a query text ("query text"), and the query data in the voice modality is query voice ("query voice").

In an embodiment, the query data in the plurality of modalities may include the query image and the query text, or the query data in the plurality of modalities may include the query image and the query voice, or the query data in the plurality of modalities may include the query text and the query voice, or the query data in the plurality of modalities may include the query image, the query text, and the query voice.

The query data in the plurality of modalities may be independent of each other, the query data in different modalities may be associated with each other or may not be associated. For example, the query data in the plurality of modalities includes the query image and the query text. The query image may be an image including three peonies, and the query text may be "three peonies". In this case, the query image is associated with the query text. In another example, the query image may be an image including three peonies, and the query text may be "three cars". In this case, the query image is not associated with the query text.

Step 202: The electronic device performs feature extraction on the query data based on a target model, to obtain a plurality of first features respectively in the plurality of modalities; for each of the plurality of candidate images, the electronic device performs feature extraction on the respective candidate image based on the target model, to obtain a plurality of second features when the respective candidate image is aligned with the query data respectively in the plurality of modalities.

In an embodiment, feature extraction is to map the query data to a high-dimensional feature space. That feature extraction is performed on the query data based on a target model may be to perform feature extraction on the query data in each modality based on the target model. Correspondingly, different feature extraction units may be configured for the target model, to perform feature extraction on the query data in each modality. In other words, each first feature corresponds to one modality. For example, when the query data in the plurality of modalities includes the query image and the query text, the target model includes an image feature extraction unit and a text feature extraction unit, where the image feature extraction unit is configured to perform feature extraction on the query image, and the text feature extraction unit is configured to perform feature extraction on the query text; when the query data in the plurality of modalities includes the query image and the query voice, the target model includes an image feature extraction unit and a voice feature extraction unit, where the voice feature extraction unit is configured to perform feature extraction on the query voice; when the query data in the plurality of modalities includes the query text and the query voice, the target model includes a text feature extraction unit and a voice feature extraction unit; or when the query data in the plurality of modalities includes the query image, the query text, and the query voice, the target model includes an image feature extraction unit, a text feature extraction unit, and a voice feature extraction unit.

In an embodiment, when feature extraction is performed on the query data based on the target model to obtain a plurality of first features respectively in the plurality of modalities, the specific steps include: for each of the plurality of modalities, converting the query data in the respective modality into a query embedding vector, wherein query embedding vectors of the plurality of modalities are in the same vector format; and inputting the query embedding vector into the target model, and performing feature mapping on the query data based on the target model, to obtain a first feature of the query data in the respective modality. Each first feature corresponds to one modality. The query embedding vector is configured for representing an initial feature (which is a feature before the target model performs feature extraction) of the query data. The query data in different modalities are converted into query embedding vectors in a same vector format, which facilitates unified representation of the query data in the plurality of modalities in a same model framework.

Specifically, the query embedding vector may include an information embedding vector and a type embedding vector concatenated to each other. The information embedding vector is configured for representing an information feature included in the query data. For example, when the query data is a query image, the information embedding vector is configured for representing image information of the query image; when the query data is a query text, the information embedding vector is configured for representing text information of the query image; and when the query data is query voice, the information embedding vector is configured for representing voice information of the query image. The type embedding vector is configured for representing a modality type feature of the query data. For example, when the query data is a query image, the type embedding vector is configured for indicating that the query data is in an image modality; when the query data is a query text, the type embedding vector is configured for indicating that the query data in a text modality; and when the query data is query voice, the type embedding vector is configured for indicating that the query data is in a voice modality. Based on the above, the query embedding vector may be represented as:

$$X = f_{inf} + f_{typ}$$

$X$ represents the query embedding vector, $f_{inf}$ represents the information embedding vector, and $f_{typ}$ represents the type embedding vector.

Since the query embedding vector includes the information embedding vector and the type embedding vector concatenated to each other, the image information of the query image may be represented based on the information embedding vector, and the modality type feature of the query data may be represented based on the type embedding vector. When feature extraction is subsequently performed on the query data based on the target model, the target model may determine a modality of current query data according to the type embedding vector, so that a corresponding feature extraction unit is invoked to perform feature extraction on the query data, to enable the target model to distinguish the query data in the plurality of modalities, thereby facilitating unification of representation of the query data in the plurality of modalities in the same model framework.

In an embodiment, the candidate image is aligned with the query data in each modality, that is, the candidate image and the query data in each modality are mapped to a same high-dimensional feature space, that is, the first feature and the second feature are aligned with each other in each modality. For example, if the query data in the plurality of modalities includes the query image and the query text, the candidate image and the query image are aligned in the image modality, and the candidate image and the query text are aligned in the text modality. Correspondingly, a quantity of obtained second features is equal to a quantity of modalities of the query data, that is, a second feature of the candidate image when the candidate image is aligned with the query image is obtained, and a second feature of the candidate image when the candidate image is aligned with the query text is obtained. It may be understood that, if the query data in the plurality of modalities includes the query image, the query text, and the query voice, the candidate image and the query voice are also aligned, to obtain a second feature of the candidate image when the candidate image is aligned with the query voice in the voice modality.

Correspondingly, the target model may include different modality alignment units to perform feature extraction on the candidate image, to align the candidate image to query data in one modality. For example, when the query data includes the query image and the query text, the target model includes an image modality alignment unit and a text modality alignment unit, where the image modality alignment unit is configured to align the candidate image with the query image in the image modality, that means, a similarity between the image feature of the candidate image and the image feature of the query image is higher than a preset threshold, and the text modality alignment unit is configured to align the candidate image with the query text in the text modality, that means, a similarity between the image feature of the candidate image and the text feature of the query text is higher than a preset threshold; when the query data in the plurality of modalities includes the query image and the query voice, the target model includes an image modality alignment unit and a voice modality alignment unit, where the voice modality alignment unit is configured to align the candidate image with the query voice in the voice modality, that means, a similarity between the image feature of the candidate image and the voice feature of the query voce is higher than a preset threshold; when the query data in the plurality of modalities includes the query text and the query voice, the target model includes a text modality alignment unit and a voice modality alignment unit; or when the query data in the plurality of modalities includes the query image, the query text, and the query voice, the target model includes an image modality alignment unit, a text modality alignment unit, and a voice modality alignment unit. The above similarities may be calculated in terms of vectors, i.e., an image vector, a text vector, and a voice vector.

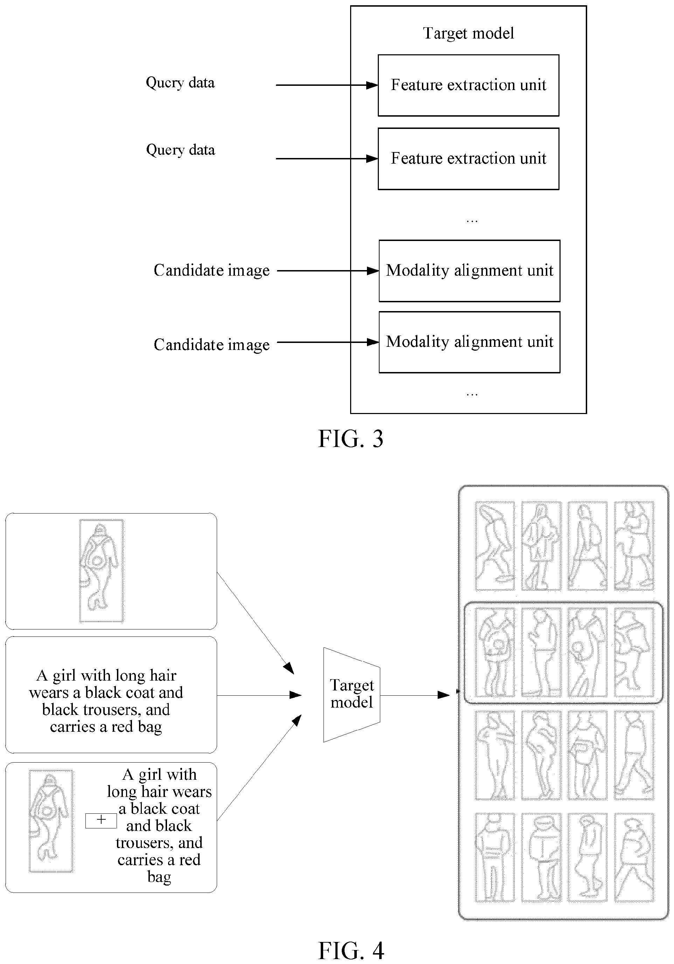

Specifically, referring to FIG. 3, FIG. 3 is an optional schematic structural diagram of a target model according to an embodiment of this disclosure. The target model includes a plurality of feature extraction units and a plurality of modality alignment units. Each feature extraction unit is configured to perform feature extraction on query data in a corresponding modality, and each modality alignment unit is configured to perform feature extraction on the candidate image, to enable the candidate image to be aligned with query data in a corresponding modality. Parameters between the feature extraction units may be different, and parameters between the modality alignment units may be different. The plurality of feature extraction units and the plurality of modality alignment units are configured in the target model. Feature extraction is performed on the query data through the target model to obtain a first feature of the query data, and then feature extraction is performed on the candidate image through the same target model for a plurality of times to obtain a second feature of the candidate image when the candidate image is aligned with query data in each modality, which can improve image query accuracy by using query data in a plurality of modalities, and unify feature frameworks of the query data in the plurality of modalities and the candidate image, thereby improving feature space consistency between the first feature and the second feature. Moreover, the server determines the first feature and the second feature by using the same target model, which can reduce a quantity of parameters of the target model, and reduce memory overheads for deploying the target model. In addition, only the same target model needs to be trained in a training stage, which improves model training efficiency.

In an embodiment, since the candidate image is data in the image modality, the image feature extraction unit may be used as an image modality alignment unit. In other words, when the query data in the plurality of modalities includes query data in the image modality, a first feature of the query image may be obtained by using the image feature extraction unit. In addition, the second feature of the candidate image may be obtained by using the image feature extraction unit. In this way, a reuse effect of the image feature extraction unit is achieved, and a structure of the target model is simplified.

It may be understood that, an image modality alignment unit may also be additionally configured, to obtain the second feature of the candidate image. This is not limited in this embodiment of this disclosure.

Therefore, when the query data in the plurality of modalities includes the query text and the query image, the target model comprises a text modality alignment unit and an image feature extraction unit, and the performing feature extraction on the respective candidate image based on the target model, to obtain a plurality of second features when the respective candidate image is aligned with the query data respectively in the plurality of modalities includes: performing, based on the text modality alignment unit, feature extraction on the respective candidate image, to obtain a second feature of the candidate image when the candidate image is aligned with the query text; and performing, based on the image feature extraction unit, feature extraction on the respective candidate image, to obtain a second feature of the candidate image when the candidate image is aligned with the query image. Each second feature corresponds to one modality. To be specific, feature extraction is performed on the candidate image based on the image feature extraction unit to obtain an image feature of the candidate image, and the image feature is used as a second feature of the candidate image when the candidate image is aligned with the query image, so that the reuse effect of the image feature extraction unit is achieved, and the structure of the target model is simplified.

The foregoing manner of reusing the image feature extraction unit may also be adopted when the query data in the plurality of modalities includes the query voice and the query image, or when the query data in the plurality of modalities includes the query text, the query voice, and the query image. Details are not described herein again.

Step 203: For each of the plurality of candidate images, the electronic device a plurality of first similarities between the respective candidate image and the query data according to the plurality of first features and the plurality of second features respectively in the plurality of modalities; the electronic device determines a plurality of query data combinations, each of the plurality of query data combinations comprising query data in at least one modality; and for the each query data combination, the electronic device determines, from the candidate image set, a target image set according to the plurality of first similarities, the target image set comprising at least one target image.

The first similarity between the candidate image and the query data in each modality is determined according to the first feature and the second feature, that is, a quantity of first similarities is equal to the quantity of modalities of the query data. For example, when the query data in the plurality of modalities includes the query image and the query text, a first similarity between the query image and the candidate image is determined according to a first feature of the query image and a second feature of the candidate image when the candidate image is aligned with the query image in the image modality, and a first similarity between the query text and the candidate image is determined according to a first feature of the query text and a second feature of the candidate image when the candidate image is aligned with the query text in the text modality; or when the query data in the plurality of modalities includes the query text, the query image, and the query voice, a first similarity between the query image and the candidate image is determined according to a first feature of the query image and a second feature of the candidate image when the candidate image is aligned with the query image in the image modality, a first similarity between the query text and the candidate image is determined according to a first feature of the query text and a second feature of the candidate image when the candidate image is aligned with the query text in the text modality, and a first similarity between the query voice and the candidate image according to a first feature of the query voice and a second feature of the candidate image when the candidate image is aligned with the query voice in the voice modality.

The query data combination includes query data in at least one modality. In other words, the query data combination may include query data in one modality (that is, a first data combination), and may include query data in a plurality of modalities (that is, a second data combination). For example, the first data combination may include the query image, or may include the query text, or may include the query voice. The second data combination may include the query image and the query text, or may include the query image and the query voice, or may include the query text and the query voice, or may include the query image, the query text, and the query voice, or the like.

In an embodiment, the first similarities may be a distance matrix of Euclidean distances, a similarity matrix of cosine similarities, a distance matrix of Chebyshev distances, or the like. This is not limited in this embodiment of this disclosure.

Since different query data combinations correspond to one first similarity or a plurality of different first similarities, the target image sets corresponding to the plurality of query data combinations may be determined from the candidate image set according to the first similarity.

For example, when the query data in the plurality of modalities includes the query image and the query text, two query data combinations may separately include the query image and the query text. Correspondingly, the target image sets corresponding to the plurality of query data combinations are a target image set corresponding to the query image and a target image set corresponding to the query text. In this case, each query data combination is the first data combination as described above. Therefore, an image query result may be subsequently obtained with reference to the target image set selected based on the query data in the plurality of modalities, so that image query accuracy can be improved.

In addition, when the query data in the plurality of modalities includes the query image and the query text, a manner of combining the first data combination and the second data combination may also be used, that is, three different query data combinations may separately include the query image, the query text, and a combination of the query image and the query text. Correspondingly, target image sets corresponding to different query data combinations are a target image set corresponding to the query image, a target image set corresponding to the query text, and a target image set corresponding to the combination of the query image and the query text. In this way, on the basis of obtaining the image query result by using the query data in each modality, a combination of the query data in the plurality of modalities is further introduced to expand the image query result, to further improve image query accuracy.

In an embodiment, for the each query data combination, determining, from the candidate image set, a target image set according to the plurality of first similarities includes: combining (or fusing) the plurality of first similarities to obtain a target similarity; and determining a target image set from the candidate image set according to the target similarity. If the image query result is obtained in the manner of combining the first data combination and the second data combination, when the target image sets corresponding to the plurality of query data combinations are determined from the candidate image set according to the first similarity, to be specific, a target image set corresponding to the first data combination may be determined from the candidate image set according to a first similarity corresponding to the query data in one modality; and first similarities corresponding to the query data in the plurality of modalities are combined to obtain a target similarity, and a target image set corresponding to the second data combination is determined from the candidate image set according to the target similarity.

Specifically, the target image set corresponding to the first data combination is a target image set with respective to the query data in each single modality, and the target image set corresponding to the second data combination is a target image set corresponding to the combination of the query data in the plurality of modalities. For example, when the query data includes the query image and the query text, the target image set corresponding to the first data combination is a target image set corresponding to the query image and a target image set corresponding to the query text. Based on this, a first similarity corresponding to the query image and a first similarity corresponding to the query text may be combined to obtain a target similarity, to implement image query in a manner of combining the query image and the query text. A manner of combining may be weighting or may be multiplying a plurality of similarities.

In an embodiment, the target image set may directly include target images that are in the candidate image set and that match the query data combinations. In addition, a quantity of target images in the target image set may be preset. When there are a plurality of target images, the target images determined from the candidate image set may further be sorted, for example, may be sorted in descending order of first similarities, to make the target image set clearer.

Step 204: The electronic device merges a plurality of target image sets to obtain an image query result.

Since different query data combinations correspond to respective target image sets, the plurality of target image sets may be merged to obtain a final image query result. To be specific, deduplication processing is performed on the target image sets to output a final image query result, or different target image sets may be directly outputted in parallel as a final image query result.

For example, referring to FIG. 4, FIG. 4 is an optional schematic flowchart of obtaining an image query result based on a plurality of query data combinations according to an embodiment of this disclosure. For example, the query data in the plurality of modalities includes the query image and the query text. The query image is an image of a girl carrying a bag, and the query text is "a girl with long hair wears a black coat and black trousers, and carries a red bag". The image of a girl carrying a bag is a query data combination 401, the text "a girl with long hair wears a black coat and black trousers, and carries a red bag" is a query data combination 402, and a combination of the image of a girl carrying a bag and the text "a girl with long hair wears a black coat and black trousers, and carries a red bag" is a query data combination 403. Target image sets corresponding to different query data combinations are merged to obtain an image query result.

In an embodiment, the query data and the candidate image may be retrieved in a one-to-one manner to obtain an image query result. One-to-one query is to input the query data and each candidate image into a query model as a data pair. The query model outputs a matching probability between the query data and the candidate image. Since there are a plurality of candidate images, one-to-one query needs to be performed in a pairwise traversal manner, which consumes more query resources. In this embodiment of this disclosure, a first similarity between the candidate image and query data in each modality is determined according to the first feature and the second feature, target image sets corresponding to a plurality of query data combinations is determined from the candidate image set according to the first similarity, and a plurality of target image sets are merged to obtain an image query result. In this way, there is no need to retrieve the query data and the candidate images in a one-to-one manner, so that image query efficiency is effectively improved. In addition, the image query result is obtained based on the target image sets corresponding to the plurality of query data combinations, which can effectively improve image query accuracy.

In an embodiment, the converting the query data in the respective modality into a query embedding vector includes: segmenting the query data to obtain a plurality of query data blocks, and performing feature mapping on the plurality of query data blocks to obtain a first embedding vector; determining location information of each of the plurality of query data blocks in the query data, and performing feature mapping on a plurality of pieces of location information to obtain a second embedding vector; performing feature mapping on the respective modality, to obtain a third embedding vector; and concatenating the first embedding vector, the second embedding vector, and the third embedding vector, to obtain the query embedding vector.

A vector obtained by concatenating the first embedding vector and the second embedding vector is equivalent to the information embedding vector. The first embedding vector is obtained by segmenting the query data, and the second embedding vector is obtained according to the location information of each query data block in the query data, to enable the information embedding vector to carry more information about the query data, thereby improving accuracy of the information embedding vector. The third embedding vector is equivalent to the type embedding vector and is configured for the target model to determine a modality of current query data according to the type embedding vector.

For the query text, the query data is segmented to obtain a plurality of query data blocks. To be specific, word segmentation may be performed on the query text to obtain a plurality of text words, and a start flag and an end flag of the query text are added and then encoded through a text encoder, which may be specifically represented as follows:

$$t = \{[cls], t_1, \ldots t_M, [sep]\}$$

$t$ represents a result obtained through encoding by the text encoder, *[cls]* represents the start flag, [sep] represents the end flag, and $t_1, \ldots t_M$ represent the text words. M is a positive integer.

The result obtained through encoding by the text encoder may be mapped to a symbol embedding vector $f^t = [f_{cls}^t, f_1^t \ldots f_M^t, f_{sep}^t]$ in a pre-trained wording embedding manner, to obtain a first embedding vector. Location information of each text word in the query text is determined, and feature mapping is performed on the location information of each text word in the query text, to obtain a second embedding vector. Then, feature mapping is performed on a text modality to obtain a third embedding vector. The first embedding vector, the second embedding vector, and the third embedding vector that correspond to the query text are concatenated, so that a query embedding vector corresponding to the query text is obtained, which may be specifically represented as follows:

$$X^t = [f_{cls}^t, f_1^t \ldots f_M^t, f_{sep}^t] + f_{pos}^t + f_{typ}^t$$

$X^t$ represents the query embedding vector corresponding to the query text, $[f_{cls}^t, f_1^t \ldots f_M^t, f_{sep}^t]$ represent the first embedding vector corresponding to the query text, $f_{pos}^t$ represents the second embedding vector corresponding to the query text, and $f_{typ}^t$ represents the third embedding vector corresponding to the query text.

For the query image, the query data is segmented to obtain a plurality of query data blocks. To be specific, image segmentation may be performed on the query image to obtain a plurality of image blocks, and a start flag of the query image is added and then encoded through an image encoder, which may be specifically represented as follows:

$$v = \{[cls], v_1, \ldots v_N\}$$

v represents a result obtained through encoding by the image encoder, *[cls]* represents the start flag, and $v_1, \ldots v_N$ represent the image blocks. N is a positive integer.

Feature mapping is performed on the result obtained through encoding by the image encoder in a manner similar to that in the text modality, to obtain a first embedding vector. Location information of each image block in the query image is determined, and feature mapping is performed on the location information of each image block in the query image, to obtain a second embedding vector. Then, feature mapping is performed on an image modality to obtain a third embedding vector. The first embedding vector, the second embedding vector, and the third embedding vector that correspond to the query image are concatenated, so that a query embedding vector corresponding to the query image is obtained, which may be specifically represented as follows:

$$X^v = [f_{cls}^v, f_1^v \ldots f_N^v, f_{sep}^v] + f_{pos}^v + f_{typ}^v$$

$X^v$ represents the query embedding vector corresponding to the query image, $[f_{cls}^v, f_1^v \ldots f_N^v, f_{sep}^v]$ represent the first embedding vector corresponding to the query image, $f_{pos}^v$ represents the second embedding vector corresponding to the query image, and $f_{typ}^v$ represents the third embedding vector corresponding to the query image.

For the query voice, the query data is segmented to obtain a plurality of query data blocks. To be specific, voice segmentation may be performed on the query voice to obtain a plurality of voice frames, and a start flag and an end flag of the query voice are added and then encoded through a voice encoder, which may be specifically represented as follows:

$$s = \{[cls], s_1, \ldots s_K, [sep]\}$$

s represents a result obtained through encoding by the voice encoder, *[cls]* represents the start flag, [sep] represents the end flag, and $s_1, \ldots s_K$ represent the voice frames. *K* is a positive integer.

Feature mapping is performed on the result obtained through encoding by the voice encoder in a manner similar to that in the text modality, to obtain a first embedding vector. Location information of each voice frame in the query voice is determined, and feature mapping is performed on the location information of each voice frame in the query voice, to obtain a second embedding vector. Then, feature mapping is performed on a voice modality to obtain a third embedding vector. The first embedding vector, the second embedding vector, and the third embedding vector that correspond to the query voice are concatenated, so that a query embedding vector corresponding to the query voice is obtained, which may be specifically represented as follows:

$$X^s = [f_{cls}^s, f_1^s \ldots f_K^s, f_{sep}^s] + f_{pos}^s + f_{typ}^s$$

$X^s$ represents the query embedding vector corresponding to the query voice, $[f_{cls}^s, f_1^s \ldots f_K^s, f_{sep}^s]$ represent the first embedding vector corresponding to the query voice, $f_{pos}^s$ represents the second embedding vector corresponding to the query voice, and $f_{typ}^s$ represents the third embedding vector corresponding to the query voice.

As can be seen, the query embedding vectors of the query data in different modalities have the same vector format, to facilitate unification of representation of the query data in the plurality of modalities in the same model framework, so that the target model may perform feature extraction on the query data in different modalities, thereby providing a basis for subsequently determining target images corresponding to different query data combinations from a plurality of candidate images.

In an embodiment, when feature mapping is performed on the result obtained through encoding by the text encoder, the result obtained through encoding by the image encoder, and the result obtained through encoding by the voice encoder, results obtained through different encoders may be mapped to different high-dimensional feature spaces, so that an obtained first embedding vector can better match a feature representation requirement of a corresponding modality, thereby improving accuracy and properness of the first embedding vector.

It may be understood that, since the candidate image is data in the image modality, when feature extraction is performed on the candidate image based on the target model, feature extraction may be performed on the candidate image with reference to the foregoing manner of obtaining the query embedding vector corresponding to the query image, to obtain an embedding vector corresponding to the candidate image, and then the embedding vector corresponding to the candidate image is inputted into the target model to perform feature extraction on the candidate image.

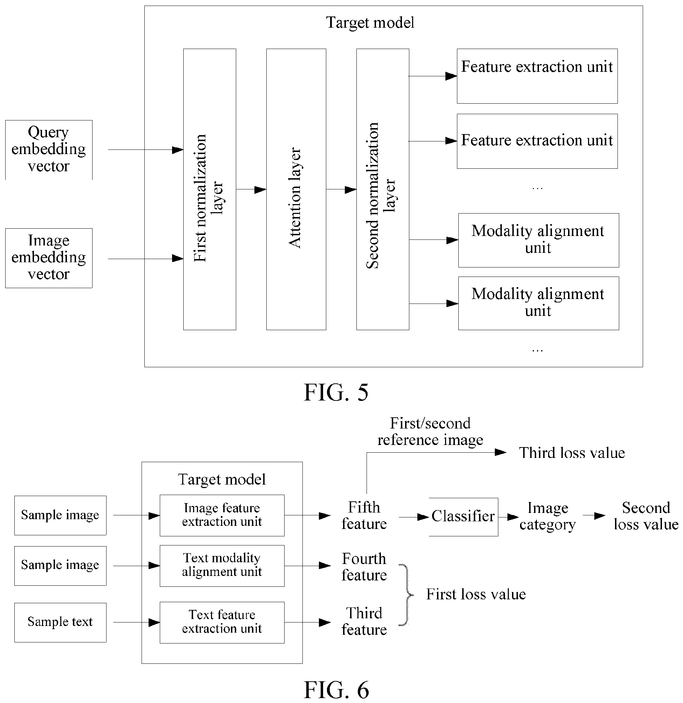

Refer to FIG. 5. FIG. 5 is another optional schematic structural diagram of a target model according to an embodiment of this disclosure. The target model may include a first normalization layer 5031, an attention layer 5032, a second normalization layer 5033, a plurality of feature extraction units 5041, 5042, ... and a plurality of modality alignment units 5051, 5052, .... In all embodiments of the present disclosure, each feature extraction unit and each modality alignment unit are composed by a deep learning network. For example, the deep learning network has an Encoder-Decoder architecture, where both the encoder and decoder are stacked with multiple identical layers, each layer consisting of two sub layers: a multi-head self-attention mechanism and a feedforward neural network. Based on a model structure shown in FIG. 5, the performing feature extraction on the query data based on a target model, to obtain a first feature of the query data in the respective modality includes: normalizing the query embedding vector 501, to obtain a first normalized vector; performing attention feature extraction on the first normalized vector, to obtain an attention vector; and performing feature mapping on the attention vector based on the target model, to obtain the first feature of the query data in the respective modality.

Normalization may be performed on the query embedding vector through the first normalization layer, to achieve a data standardization effect of the query embedding vector, thereby improving efficiency of processing the query embedding vector by the target model. Attention feature extraction may be performed on the first normalized vector through the attention layer, to extract important information in the first normalized vector, so that the first feature of the query data obtained by subsequently performing feature extraction on the attention vector based on the target model is more accurate.

In an embodiment, attention feature extraction may be performed on the first normalized vector through the attention layer by using a multi-head attention mechanism, i.e., extracting key information based on multiple weights using multiple linear transforms. The first normalization layer, the attention layer, the second normalization layer, the plurality of feature extraction units, and the plurality of modality alignment units may form an entire processing module. A plurality of processing modules may be stacked in the target model, an input by a previous processing module is used as an input by a next processing module, and an output by a last processing module is a final first feature, thereby improving accuracy of the first feature.

In an embodiment, the performing feature mapping on the attention vector based on the target model, to obtain the first feature of the query data in the respective modality includes: concatenating the attention vector and the query embedding vector, to obtain a concatenated vector; normalizing the concatenated vector, to obtain a second normalized vector; performing feed forward feature mapping on the second normalized vector based on the target model, to obtain a mapping vector; and concatenating the mapping vector and the concatenated vector, to obtain the first feature of the query data in the respective modality.

That feed forward feature mapping is performed on the second normalized vector based on the target model to obtain the mapping vector is to perform feed forward feature mapping on the second normalized vector based a corresponding feature extraction unit to obtain the mapping vector. In this case, the feature extraction unit may include a feed forward mapping layer. The attention vector and the query embedding vector are concatenated, to obtain the concatenated vector, so that the concatenated vector may carry original information of the query embedding vector, thereby improving accuracy of the concatenated vector.

Normalization may be performed on the concatenated vector through the second normalization layer, to achieve a data standardization effect of the concatenated vector, thereby improving efficiency of processing the query embedding vector by the target model. The mapping vector and the concatenated vector are concatenated to obtain the first feature of the query data, so that the first feature may carry original information of the concatenated vector, thereby improving accuracy of the first feature.

It may be understood that, a second feature of the candidate image is obtained based on the target model in a manner similar to the manner obtaining the first feature of the query data based on the target model. Similarly, the candidate image may be converted into an image embedding vector, and the image embedding vector is of the same vector format as the query embedding vector. Normalization is performed on the image embedding vector, to obtain a first normalized vector corresponding to the candidate image. Attention feature extraction is performed on the first normalized vector corresponding to the candidate image, to obtain an attention vector corresponding to the candidate image. The attention vector corresponding to the candidate image and the image embedding vector are concatenated, to obtain a concatenated vector corresponding to the candidate image. Normalization is performed on the concatenated vector corresponding to the candidate image, to obtain a second normalized vector corresponding to the candidate image. Feed forward feature mapping is performed on the second normalized vector corresponding to the candidate image based on each modality alignment unit, to obtain a mapping vector corresponding to the candidate image. The mapping vector corresponding to the candidate image and the concatenated vector corresponding to the candidate image are concatenated, to obtain a second feature of the candidate image when the candidate image is aligned with query data in each modality.

Therefore, when the first feature of the query data is obtained based on the target model, and the second feature of the candidate image is obtained based on the target model, the same first normalization layer, attention layer, and second normalization layer may be shared, and different feature extraction units are invoked to perform feature extraction or different modality alignment units are invoked to perform feature extraction, to simplify a structure of the target model.

For example, the query data in the plurality of modalities includes the query image and the query text, when the processing modules are stacked in the target model, the concatenated vector may be collectively represented as follows:

$$X_i^{v/t} = MSA(LN(X_{i-1}^{v/t})) + X_{i-1}^{v/t}$$

$X_i^{v/t}$ represents a concatenated vector that corresponds to the query image, the query text, or the candidate image and that is generated in an ith processing module, i being a positive integer, *MSA* represents a multi-head attention mechanism, *LN* represents normalization, and $X_{i-1}^{v/t}$ represents a query embedding vector inputted into the ith processing module (which is a first feature corresponding to a query image or a query text outputted by an (i-1)th processing module), i being a positive integer. When i = 1, $X_{i-1}^{v/t}$ represents a query embedding vector of the query image or the query text.

Correspondingly, the first feature and the second feature may be combined as follows:

$$X_i^{img/vis/txt} = MLP_{img/vis/txt}(LN(X_i^{v/t})) + X_i^{v/t}$$

$X_i^{img/vis/txt}$ represents a first feature of the query image or the query text generated in the $i^{th}$ processing module or a second feature of the candidate image, and *MLP* represents feed forward mapping.

In an embodiment, before the candidate image set and the query data in the plurality of modalities are obtained, the target model may be first trained, including: obtaining a sample image, and sample query data in at least one modality other than an image modality; determining a similarity tag between the sample image and the sample query data; performing feature extraction on the sample query data based on the target model, to obtain a third feature of the sample query data; performing feature extraction on the sample image based on the target model, to obtain at least one fourth feature of the sample image when the sample image is aligned with the sample query data respectively in the at least one modality; determining a second similarity between the sample image and the sample query data according to the third feature and the at least one fourth feature; determining a first loss value according to the second similarity and the similarity tag; and adjusting a parameter of the target model according to the first loss value.

Both the sample query data and the sample image are configured for training the target model. Since the sample query data and the sample image have different modalities, the sample query data may be a sample text, sample voice, or the like. The similarity tag between the sample image and the sample query data is configured for indicating whether the sample image matches the sample query data. The similarity tag may be " 1" or "0". When the similarity tag is "1", the sample query data matches the corresponding sample image, for example, if the sample query data is the sample text, and the sample text is "a boy carrying a schoolbag", the sample image is an image of a boy carrying a schoolbag. When the similarity tag is "0", the sample query data does not match the corresponding sample image, for example, if the sample text is "a boy carrying a schoolbag", the sample image is an image of a peony.

A principle of performing feature extraction on the sample query data based on the target model to obtain the third feature of the sample query data is similar to the principle of performing feature extraction on the query data based on the target model to obtain the first feature of the query data. Details are not described herein again. Similarly, a principle of performing feature extraction on the sample image based on the target model for a plurality times to obtain the fourth feature of the sample image when the sample image is aligned with the sample query data in each modality is similar to the principle of performing feature extraction on the candidate image based on the target model to obtain the second feature of the candidate image when the candidate image is aligned with the query data in each modality. Details are not described herein again. A manner of calculating the second similarity is similar to the manner of calculating the first similarity. Details are not described herein again. After the second similarity between the sample image and the query data is determined, since the similarity tag between the corresponding sample image and the sample query data is known, the first loss value may be determined according to the second similarity and the corresponding similarity tag, which may be specifically represented as follows:

$$L_1 = \frac{1}{B} \sum_{i=1}^{B} \sum_{j=1}^{B} (p_{i,j} \cdot log \frac{p_{i,j}}{q_{i,j} + \in})$$

$L_1$ represents the first loss value, B represents a quantity of sample pairs formed by the sample query data and sample images, i represents an $i^{th}$ sample image, j represents a $j^{th}$ piece of sample query data, both i and j being positive integers, $p_{i,j}$ represents a probability value obtained by normalizing the second similarity, $q_{i,j}$ represents a probability value obtained by normalizing the similarity tag, and E represents a very small floating point number for stabilizing a numerical value (for example, preventing a denominator from being 0).

Specifically,

$$p_{i,j} = \frac{exp(f_i^T \cdot f_j)}{\sum_{k=1}^{B} exp(f_i^T \cdot f_k)}, q_{i,j} = \frac{y_{i,j}}{\sum_{k=1}^{B} y_{i,k}}$$

$f_i^T$ represents a transpose of a fourth feature of the i sample image, $f_j$ represents a third feature of the $j^{th}$ piece of sample query data, $f_k$ represents a third feature of a $k^{th}$ piece of sample query data, $y_{i,j}$ represents a similarity tag between the $i^{th}$ sample image and the $j^{th}$ piece of sample query data, and $y_{i,k}$ represents a similarity tag between the $i^{th}$ sample image and the $k^{th}$ piece of sample query data.

Since the first loss value is determined based on the third feature and the fourth feature, that the parameter of the target model is adjusted according to the first loss value may be to adjust parameters of the modality alignment unit and the corresponding feature extraction unit in the target model, to achieve joint training between a modality alignment unit and a feature extraction unit in a corresponding modality, thereby effectively improving a degree of alignment between the modality alignment unit and the feature extraction unit in the corresponding modality, and improving training efficiency of the target model.

In an embodiment, when the target model includes an image feature extraction unit and reuses the image feature extraction unit (that is, the image feature extraction unit is configured to perform feature extraction on the query image and perform feature extraction on the candidate image), the adjusting a parameter of the target model according to the first loss value includes: obtaining a category tag of the sample image; performing feature extraction on the sample image based on the target model, to obtain a fifth feature of the sample image in the image modality; classifying the sample image according to the fifth feature, to obtain a sample category; determining a second loss value according to the sample category and the category tag; and adjusting the parameter of the target model according to the first loss value and the second loss value.

The category tag of the sample image is configured for indicating a category of the sample image. For example, if the sample image is an image of a dog, the category tag of the sample image is "animal", "dog", or the like. That feature extraction is performed on the sample image based on the target model may be to perform feature extraction on the sample image based on the image feature extraction unit, to obtain a fifth feature of the sample image in the image modality. After the fifth feature of the sample image is obtained, the fifth feature may be inputted into a classifier to perform classification on the sample image, to obtain a sample category, to further determine a second loss value according to the sample category and the category tag. The second loss value may be specifically represented as follows:

$$ L_2 = \sum_{x=1}^{m} p(x) log q(x) $$

$L_2$ represents the second loss value, $p(x)$ represents a probability distribution corresponding to the category tag, $q(x)$ represents a probability distribution corresponding to the sample category, $x$ represents a serial number of a category of the sample image, and m represents a total quantity of categories of the sample image, both $x$ and m being positive integers.

In an embodiment, that the parameter of the target model is adjusted according to the first loss value and the second loss value may be to independently adjust the parameter of the target model according to the first loss value and the second loss value, or may be to weight the first loss value and the second loss value to obtain a total loss value, and adjust the parameter of the target model according to the total loss value.

The category tag is introduced, and the sample image is classified according to the fifth feature, to further obtain the second loss value. Image classification may be introduced to adjust a parameter of the image feature extraction unit, so that a training manner in another scenario may be introduced to adjust the parameter of the image feature extraction unit, thereby improving a generalization capability of the image feature extraction unit.

In an embodiment, when the target model includes the image feature extraction unit and reuses the image feature extraction unit, and the adjusting a parameter of the target model according to the first loss value includes: obtaining a first reference image that is of the same category as the sample image and a second reference image that is of a different category from the sample image; performing feature extraction on the sample image, the first reference image, and the second reference image based on the target model, to respectively obtain a fifth feature of the sample image in the image modality, a sixth feature of the first reference image, and a seventh feature of the second reference image; determining a third similarity between the fifth feature and the sixth feature and a fourth similarity between the fifth feature and the seventh feature, and determining, a third loss value according to the third similarity and the fourth similarity; and adjusting, the parameter of the target model according to the first loss value and the third loss value.

There may be a plurality of sample images. For one of the sample images, the first reference image and the second reference image may be images in the plurality of sample images, or may be images other than the plurality of sample images. This is not limited in this embodiment of this disclosure. That feature extraction is performed on the sample image, the first reference image, and the second reference image based on the target model is to perform feature extraction on the sample image, the first reference image, and the second reference image based on the image feature extraction unit. Since the first reference image is of the same category as the sample image, the third similarity is normally higher. Similarly, since the second reference image is of a different category than the sample image, the fourth similarity is normally lower. Correspondingly, the third loss value may be specifically represented as follows:

$$L_3 = d_{AP} - d_{AN} + \alpha$$

$L_3$ represents the third loss value, $d_{AP}$ represents the third similarity, $d_{AN}$ represents the fourth similarity, and $\alpha$ represents a hyperparameter.

In an embodiment, that the parameter of the target model is adjusted according to the first loss value and the third loss value may be to independently adjust the parameter of the target model according to the first loss value and the third loss value, or may be to weight the first loss value and the third loss value to obtain a total loss value, and adjust the parameter of the target model according to the total loss value.

The third similarity and the fourth similarity are respectively determined by introducing the first reference image and the second reference image, to further obtain the third loss value. In this way, a distance between images of the same category may be closer, and a distance between images of different categories may be farther, so that features extracted by the feature extraction unit are more accurate.

In an embodiment, the first loss value, the second loss value, and the third loss value may be weighted to obtain a total loss value, and the parameter of the target model is adjusted according to the total loss value. For example, when weight values of the first loss value, the second loss value, and the third loss value are 1, the total loss value may be represented as follows:

$$L_{total} = L_1 + L_2 + L_3$$

$L_{total}$ represents the total loss value.

When the target model includes the image feature extraction unit and reuse the image feature extraction unit, targeted training may be performed on the image feature extraction unit and the modality alignment unit by simultaneously introducing the first loss value, the second loss value, and the third loss value, which is beneficial to improving a training effect.

A training process of the target model is described below by using an example in which the target model performs image query based on the query text and the query image.

Refer to FIG. 6. FIG. 6 is an optional schematic diagram of a training process of a target model according to an embodiment of this disclosure. Specifically, a sample image set and a sample text set may be obtained, the sample image set and sample text set are inputted into the target model 602, and feature extraction is performed on a sample text 6013 in the sample text set through a text feature extraction unit 6023 of the target model 602, to obtain a third feature of the sample text 6013; feature extraction is performed on a sample image 601 in the sample image set through a text modality alignment unit 6022 of the target model 602, to obtain a fourth feature of the sample image 601 when the sample image 601 is aligned with the sample text 6013; feature extraction is performed on the sample image 601 in the sample image set through the image feature extraction unit 6021 of the target model 602, to obtain a fifth feature of the sample image 601; the first loss value is calculated by using the third feature and the fourth feature; the fifth feature is normalized, the normalized fifth feature is inputted into a classifier 603 to obtain an image category of the sample image 601, and the second loss value is calculated according to the image category of the sample image 601 and the category tag of the sample image; a first reference image and second reference image of the sample image 601 is determined from the sample image set, the third loss value is calculated according to a similarity between the sample image 601 and the first reference image and a similarity between the sample image 601 and the second reference image; and a total loss value is obtained by summing the first loss value, the second loss value, and the third loss value, and the parameter of the target model is adjusted according to the total loss value.

In an embodiment, during training of the target model, when the sample query data includes the sample text, a training sample of the target model may be expanded, to improve a training effect. The sample query data comprises sample texts, and the obtaining a sample image, and sample query data in at least one modality other than an image modality includes: obtaining an initial image and an initial text; performing enhancement processing on the initial image, to obtain an enhanced image; deleting a text component of any length in the initial text to obtain an enhanced text, or adjusting a text component in the initial text by using a text component in a reference text to obtain an enhanced text, wherein the reference text is of the same category as the initial text; and using the initial image and the enhanced image as sample images, and using the initial text and the enhanced text as the sample texts.

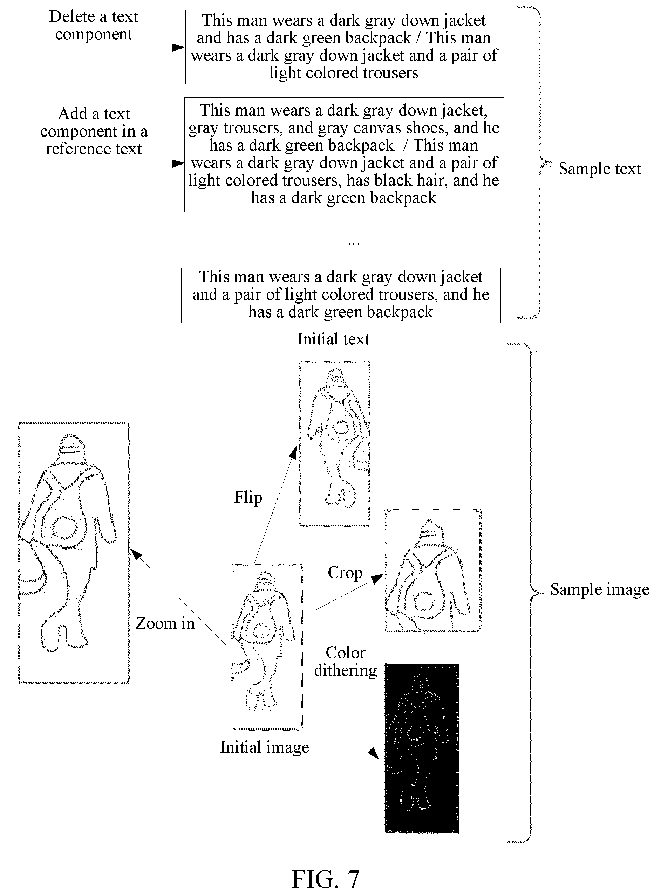

Specifically, referring to FIG. 7, FIG. 7 is an optional schematic flowchart of expanding a training sample according to an embodiment of this disclosure. In a training data set, the initial image and the initial text may exist in pairs, there may be a plurality of data pairs each including the initial image and the initial text, and the data pairs formed by the initial image and the initial text may be annotated with category tags.

For the initial image, enhancement processing may be performed on the initial image, to obtain an enhanced image. Enhancement processing includes but is not limited to one or a combination of more processing such as zooming in, zooming out, cropping, flipping, color gamut transformation, color dithering, and the like.

For the initial text, a text component of any length in the initial text may be deleted, to obtain an enhanced text. The text component may be a word, a sentence, or a paragraph. For example, if the initial text 701 is "this man wears a dark gray down jacket and a pair of light colored trousers, and he has a dark green backpack", the enhanced text 704 may be "this man wears a dark gray down jacket and has a dark green backpack", or the enhanced text 705 may be "this man wears a dark gray down j acket and a pair of light colored trousers", or the like. In addition, a text component in the initial text may also be adjusted by using a text component in a reference text, to obtain an enhanced text. The reference text is of the same category as the initial text, and a reference text of a current initial text may be determined from remaining initial texts in the training data set by using a category tag. That the text component in the initial text is adjusted by using the text component in the reference text may be to replace the text component in the initial text with the text component in the reference text, or may be to add the text component in the reference text based on the text component in the initial text. For example, if the initial text 701 is "this man wears a dark gray down jacket and a pair of light colored trousers, and he has a dark green backpack", and the reference text is "a man has black hair, wears a gray shirt, gray trousers, and gray canvas shoes, and carries a bag", the enhanced text 702 is "this man wears a dark gray down jacket, gray trousers, and gray canvas shoes, and he has a dark green backpack", or the enhanced text 703 may be "this man wears a dark gray down jacket and a pair of light colored trousers, has black hair, and he has a dark green backpack", or the like.

The enhanced image and the enhanced text are obtained through processing above. Subsequently, the target model may be trained by using the enhanced image and the enhanced text. The initial image and the enhanced text, the enhanced image and the initial text, and the enhanced image and the enhanced text may all form new data pairs, which makes training data of the target model more diverse, especially when parameters of the modality alignment unit are adjusted, thereby significantly improving performance of the modality alignment unit.

Similarly, for initial voice, enhanced voice may also be obtained in a manner such as acceleration, deceleration, voice frame replacement, voice frame deletion, or noise addition, and training is performed on the target model by using the initial voice and the enhanced voice.

After training on the target model is completed, performance of the target model may be further verified when image query is performed through the target model. Specifically, for a query data combination including query data in one modality, a cumulative matching characteristic (CMC) and mean average precision (mAP) may be calculated according to a first similarity in each modality. For a query data combination including query data in a plurality of modalities, the cumulative matching characteristic and the mean average precision may be calculated according to a target similarity in the plurality of modalities, to further verify performance of the target model from different dimensions. When the cumulative matching characteristic and the mean average precision do not reach a preset threshold, adjustment on the parameter of the target model may be performed again.

Performance of the target model in the image query method provided in the embodiments of this disclosure is described below by using CUHK-PEDES and RSTP data sets as an example.

Refer to Table 1 and Table 2. Table 1 shows evaluation effect data of different image query methods on the CUHK-PEDES data set in the embodiments of this disclosure. Table 2 shows evaluation effect data of different image query methods on the RSTP data set in the embodiments of this disclosure. Rank-1, Rank-5, and Rank-10 are evaluation indicators of the CMC. As can be seen from Table 1 and Table 2, the image query method provided in this disclosure has higher accuracy than other image query methods in the related art, and the image query method provided in this disclosure only uses global features in data above.

Table 1 Evaluation effect data of different image query methods on the CUHK-PEDES data set

| Method | Feature | Rank-1 | Rank-5 | Rank-10 |
|---|---|---|---|---|
| GNA-RNN | Global | 19.05 | - | 53.64 |
| CNN-LSTM | Global | 58.94 | - | 60.48 |
| CMPM+CMPC | Global | 49.37 | - | 79.27 |
| MIA | Global+Local | 48.00 | 70.70 | 79.00 |
| A-GANet | Global+Local | 53.14 | 74. 03 | 82.95 |
| PMA | Global+Local | 53.81 | 73.54 | 81.23 |
| HGAN | Global+Local | 59.00 | 79.49 | 86.63 |

(continued)

| Method | Feature | Rank-1 | Rank-5 | Rank-10 |
|---|---|---|---|---|
| ViTTA | Global+Local | 55.97 | 75.84 | 83.52 |
| CMMT | Global+Local | 57.10 | 78.14 | 85.23 |
| DSSL | Global+Local | 59.98 | 80.41 | 87.56 |
| MGEL | Global+Local | 60.27 | 80.01 | 86.74 |
| NAFS | Global+Local | 61.50 | 81.19 | 87.51 |
| TBPS | Global+Local | 61.65 | 80.98 | 86.78 |
| This disclosure | Global | 64.12 | 82.41 | 88.35 |

Table 2 Evaluation effect data of different image query methods on the RSTP data set

| Method | Feature | Rank-1 | Rank-5 | Rank-10 |
|---|---|---|---|---|
| DSSL | Global+Local | 32.43 | 55.08 | 63.19 |
| This disclosure | Global | 42 | 65.55 | 74.15 |

Refer to Table 3 and Table 4. Table 3 shows evaluation effect data of performing image query by using a text in different image query methods provided in the embodiments of this disclosure. Table 4 shows evaluation effect data of performing image query by using an image in different image query methods provided in the embodiments of this disclosure. R1 is an abbreviation of Rank-1, R5 is an abbreviation of Rank-5, and R10 is an abbreviation of Rank-10. As can be seen from Table 3 and Table 4, when independently evaluating image query performed by using a text and image query performed by using an image, the image query method provided in this disclosure has higher accuracy than other image query methods in the related art.

Table 3 Evaluation effect data of performing image query by using a text in different image query methods

| Method | CUHK-PEDES | | | | RSTP | | | |
|---|---|---|---|---|---|---|---|---|
| | R1 | R5 | R10 | mAP | R1 | R5 | R10 | mAP |
| NAFS | 47.44 | 69.76 | 77.80 | 43.60 | 18.45 | 39.50 | 50.75 | 18.45 |
| TBPS | 51.34 | 73.54 | 81.71 | 49.75 | 18.25 | 38.75 | 46.75 | 17.96 |
| This disclosure | 55.49 | 75.85 | 83.17 | 52.74 | 21.75 | 39.75 | 48.75 | 18.97 |

Table 4 Evaluation effect data of performing image query by using an image in different image query methods

| Method | CUHK-PEDES | | | | RSTP | | | |
|---|---|---|---|---|---|---|---|---|
| | R1 | R5 | R10 | mAP | R1 | R5 | R10 | mAP |
| NAFS | 91.10 | 97.32 | 97.68 | 78.79 | 74.25 | 90.50 | 94.50 | 56.55 |
| TBPS | 96.46 | 98.90 | 99.15 | 89.39 | 88.75 | 96.75 | 97.50 | 70.39 |
| This disclosure | 98.05 | 99.39 | 99.76 | 94.36 | 95.50 | 97.25 | 98.50 | 84.65 |

In addition, referring to Table 5, Table 5 shows evaluation effect data of performing image query by using a text, performing image query by using an image, and performing image query by using a combination of the text and the image in the image query method provided in the embodiments of this disclosure. Image query performed by using the combination of the text and the image has higher accuracy. Therefore, in this disclosure similarities corresponding to query data in different modalities are not combined, to implement image query by using a combination of the query data in different modalities, which can significantly image query accuracy.

Table 5 Evaluation effect data of the image query method provided in the embodiments of this disclosure

| Method | CUHK-PEDES | | | | RSTP | | | |
|---|---|---|---|---|---|---|---|---|
| | R1 | R5 | R10 | mAP | R1 | R5 | R10 | mAP |
| Text | 55.49 | 75.85 | 83.17 | 52.74 | 21.75 | 39.75 | 48.75 | 18.97 |
| Image | 98.05 | 99.39 | 99.76 | 94.39 | 95.50 | 97.25 | 98.50 | 84.65 |
| Combination of the text and the image | 98.29 | 99.63 | 99.76 | 99.76 | 95.50 | 97.50 | 98.50 | 85.00 |

An overall architecture of the target model in the embodiments of this disclosure is described below by using a practical example.

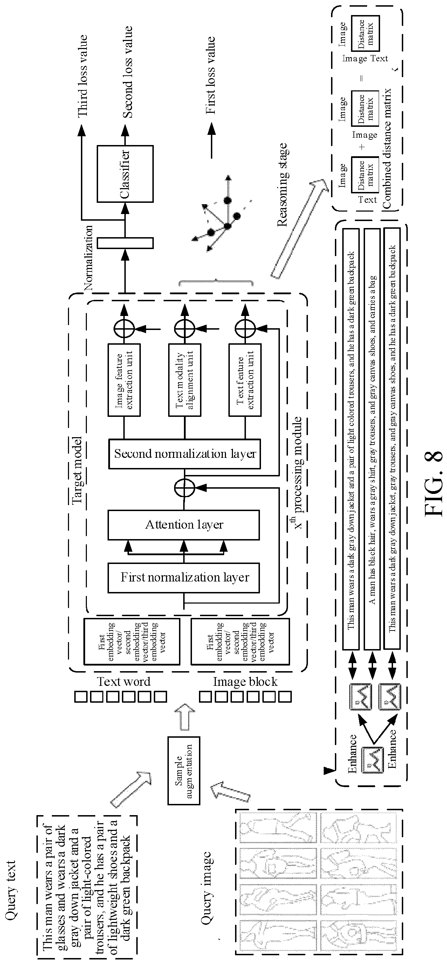

Refer to FIG. 8. FIG. 8 is an optional schematic diagram of an overall architecture of a target model according to an embodiment of this disclosure. The target model includes a first normalization layer, an attention layer, a second normalization layer, an image feature extraction unit, a text modality alignment unit, and a text feature extraction unit.

In a training stage of the target model:

A plurality of data pairs formed by a sample text and a sample image are inputted, a sample text of one of the data pairs inputted may be "this man wears a pair of glasses and wears a dark gray down jacket and a pair of light-colored trousers, and he has a pair of lightweight shoes and a dark green backpack", an inputted sample image is a character image. Intra-class text and image augmentation are performed. For the sample image, random enhancement processing may be performed, that is, the sample image is processed in one or more processing manners randomly selected from zooming in, zooming out, cropping, flipping, color gamut transformation, color dithering, and the like, and a text component of the sample text is adjusted, for example, texts "this man wears a dark gray down jacket and a pair of light colored trousers, and he has a dark green backpack", "a man has black hair, wears a gray shirt, gray trousers, and gray canvas shoes, and carries a bag", and "this man wears a dark gray down jacket, gray trousers, and gray canvas shoes, and he has a dark green backpack" may be obtained, an image obtained through enhancement ad a text obtained through text component adjustment may form a new data pair, thereby expanding training data of the target model. The data pairs are encoded to obtain an image embedding vector and a text embedding vector. The image embedding vector and the text embedding vector are inputted into the target model, and normalization by the first normalization layer, attention feature extraction by the attention layer, and normalization by the second normalization layer are performed to obtain an image normalized vector and a text normalized vector. According to a corresponding input type, feed forward mapping is performed on the image normalized vector through the image feature extraction unit to obtain an image feature of the sample image, feed forward mapping is performed on the text normalized vector through the text feature extraction unit to obtain a text feature of the sample text, and feed forward mapping is performed on the image normalized vector through the text modality alignment unit to obtain an image feature of the sample image when the sample image is aligned with the sample text. Next, the first loss value is calculated based on the text feature of the sample text and the image feature of the sample image when the sample image is aligned with the sample text, the second loss value and the third loss value are calculated based on the image feature of the sample image, and the parameter of the target model is adjusted according to the first loss value, the second loss value, and the third loss value.

In a reasoning stage of the target model:

A data pair $< v_q, t_q >$ formed by a query image and a query text, and a candidate image $< v_g >$ in a candidate image data set are inputted, a feature $f_q^{img}$ of a query image $v_q$ and a feature $f_g^{img}$ of a candidate image $v_g$ are extracted through the image feature extraction unit of the target model, a feature $f_q^{txt}$ of a query text $t_q$ is extracted through the text feature extraction unit of the target model, and a feature $f_g^{vis}$ when the candidate image $v_g$ is aligned with the query text $t_q$ is extracted through the text modality alignment unit.

A Euclidean distance matrix between the query text $t_q$ and the candidate image $v_g$ is calculated as follows:

$$D_{t2i} = dist(f_q^{txt}, f_g^{vis})$$ , a target image set corresponding to the query text $t_q$ is determined from the candidate image data set according to the Euclidean distance matrix $D_{t2i}$, and corresponding $CMC_{t2i}$ and $mAP_{t2i}$ are calculated according to the Euclidean distance matrix $D_{t2i}$.

A Euclidean distance matrix between the query image $v_q$ and the candidate image $v_g$ is calculated as follows:

$$D_{i2i} = dist(f_q^{img}, f_g^{img})$$ , a target image set corresponding to the query image $v_q$ is determined from the candidate image data set according to the Euclidean distance matrix $D_{i2i}$, and corresponding $CMC_{i2i}$ and $mAP_{i2i}$ are calculated according to the Euclidean distance matrix $D_{i2i}$.

A combined Euclidean distance matrix between the data pair $< v_q, t_q >$ formed by the query image and the query text and the candidate image $v_g$ is calculated as follows: $D_{ti2i} = \lambda \cdot D_{i2i} + (1 - \lambda) \cdot D_{t2i}$, a target image set corresponding to the data pair $< v_q, t_q >$ is determined from the candidate image data set according to the Euclidean distance matrix $D_{ti2i}$, and corresponding $CMC_{ti2i}$ and $mAP_{ti2i}$ are calculated according to the combined Euclidean distance matrix $D_{ti2i}$.

Finally, the target image set corresponding to the query text $t_q$, the target image set corresponding to the query image $v_q$, and the target image set corresponding to the data pair $< v_q, t_q >$ are merged, to obtain an image query result.

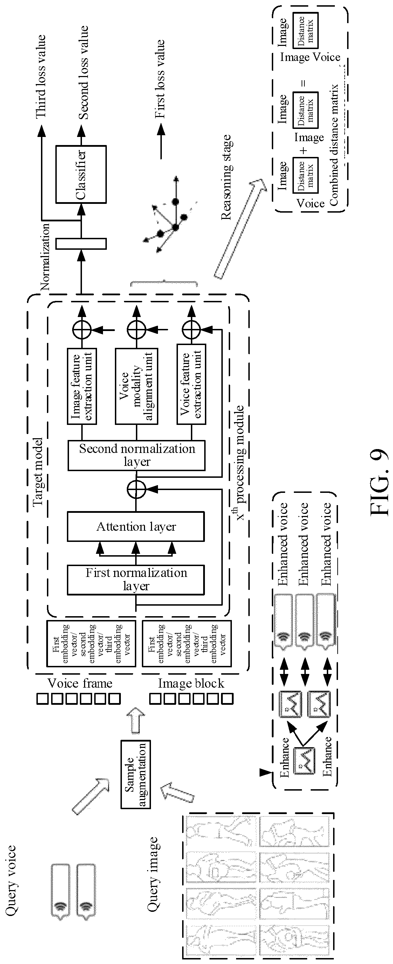

In addition, referring to FIG. 9, FIG. 9 is another optional schematic diagram of an overall architecture of a target model according to an embodiment of this disclosure. The target model includes a first normalization layer, an attention layer, a second normalization layer, an image feature extraction unit, a voice modality alignment unit, and a voice feature extraction unit.

In a training stage of the target model:

A plurality of data pairs formed by sample voice and a sample image are inputted, the inputted sample image is a character image, the inputted sample voice is voice for describing a character in the sample image. Intra-class voice and image augmentation are performed. For the sample image, random enhancement may be performed, that is, the sample image is processed in one or more processing manners randomly selected from zooming in, zooming out, cropping, flipping, color gamut transformation, color dithering, and the like. For the sample voice, random enhancement may also be performed, that is, the sample voice is processed in one or more processing manners randomly selected from acceleration, deceleration, voice frame replacement, voice frame deletion, and noise addition. An image and voice obtained through enhancement may form a new data pair, thereby expanding training data of the target model. The data pairs are encoded to obtain an image embedding vector and a voice embedding vector. The image embedding vector and the voice embedding vector are inputted into the target model, and normalization by the first normalization layer, attention feature extraction by the attention layer, and normalization by the second normalization layer are performed to obtain an image normalized vector and a voice normalized vector. According to a corresponding input type, feed forward mapping is performed on the image normalized vector through the image feature extraction unit to obtain an image feature of the sample image, feed forward mapping is performed on the voice normalized vector through the voice feature extraction unit to obtain a voice feature of the sample voice, and feed forward mapping is performed on the image normalized vector through the voice modality alignment unit to obtain an image feature of the sample image when the sample image is aligned with the sample voice. Next, the first loss value is calculated based on the voice feature of the sample voice and the image feature of the sample image when the sample image is aligned with the sample voice, the second loss value and the third loss value are calculated based on the image feature of the sample image, and the parameter of the target model is adjusted according to the first loss value, the second loss value, and the third loss value.

In a reasoning stage of the target model:

A data pair $< v_q, s_q >$ formed by a query image and query voice, and a candidate image $< v_g >$ in a candidate image data set are inputted, a feature $f_q^{img}$ of a query image $v_q$ and a feature $f_g^{img}$ of a candidate image $v_g$ are extracted through the image feature extraction unit of the target model, a feature $f_q^{sou}$ of a query voice $s_q$ is extracted through the voice feature extraction unit of the target model, and a feature $f_g^{voi}$ when the candidate image $v_g$ is aligned with the query voice $s_q$ is extracted through the voice modality alignment unit.

A Euclidean distance matrix between the query voice $s_q$ and the candidate image $v_g$ is calculated as follows:

$$D_{s2i} = dist(f_q^{sou}, f_g^{voi})$$, a target image set corresponding to the query voice $s_q$ is determined from the candidate image data set according to the Euclidean distance matrix $D_{s2i}$, and corresponding $CMC_{s2i}$ and $mAP_{s2i}$ are calculated according to the Euclidean distance matrix $D_{s2i}$.

A Euclidean distance matrix between the query image $v_q$ and the candidate image $v_g$ is calculated as follows:

$$D_{i2i} = dist(f_q^{img}, f_g^{img})$$, target image set corresponding to the query image $v_q$ is determined from the candidate image data set according to the Euclidean distance matrix $D_{i2i}$, and corresponding $CMC_{i2i}$ and $mAP_{i2i}$ are calculated according to the Euclidean distance matrix $D_{i2i}$.

A combined Euclidean distance matrix between the data pair $< v_q, s_q >$ formed by the query image and the query voice and the candidate image $v_q$ is calculated as follows: $D_{si2i} = \lambda \cdot D_{i2i} + (1 - \lambda) \cdot D_{s2i}$, a target image set corresponding to the data pair $< v_q, s_q >$ is determined from the candidate image data set according to the Euclidean distance matrix $D_{si2i}$, and corresponding $CMC_{si2i}$ and $mAP_{si2i}$ are calculated according to the combined Euclidean distance matrix $D_{si2i}$.

Finally, the target image set corresponding to the query voice $s_q$, the target image set corresponding to the query image $v_q$, and the target image set corresponding to the data pair $< v_q, s_q >$ are merged, to obtain an image query result.

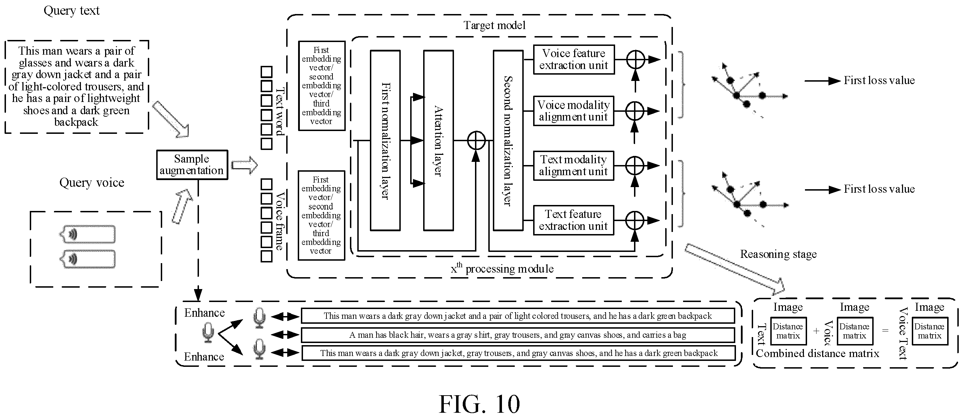

In addition, referring to FIG. 10, FIG. 10 is another optional schematic diagram of an overall architecture of a target model according to an embodiment of this disclosure. The target model includes a first normalization layer, an attention layer, a second normalization layer, a text feature extraction unit, a text modality alignment unit, a voice modality alignment unit, and a voice feature extraction unit.

In a training stage of the target model:

A plurality of data pairs formed by the sample voice and the sample text, and the sample image are inputted. For the inputted sample text, reference may be made to the example shown in FIG. 7. Details are not described herein again. The inputted sample voice is voice for describing a character in the sample text. Intra-class voice, text, and image augmentation are performed. For details, reference may be made to the descriptions in the foregoing examples, which is not described herein again. The data pairs and the sample image are encoded to obtain a text embedding vector, a voice embedding vector, and an image embedding vector. The text embedding vector, the voice embedding vector, and the image embedding vector are inputted into the target model, and normalization by the first normalization layer, attention feature extraction by the attention layer, and normalization by the second normalization layer are performed to obtain a text normalized vector, a voice normalized vector, and an image normalized vector. According to a corresponding input type, feed forward mapping is performed on the text normalized vector through the text feature extraction unit to obtain an image feature of the sample text, feed forward mapping is performed on the voice normalized vector through the voice feature extraction unit to obtain a voice feature of the sample voice, feed forward mapping is performed on the image normalized vector through the voice modality alignment unit to obtain an image feature of the sample image after the sample image is aligned with the sample voice, and feed forward mapping is performed on the image normalized vector through the text modality alignment unit to obtain an image feature of the sample image when the sample image is aligned with the sample text. Next, the first loss value is calculated based on the voice feature of the sample voice and the image feature of the sample image after the sample image is aligned with the sample voice, and the text feature of the sample text and the image feature of the sample image when the sample image is aligned with the sample text, and the parameter of the target model is adjusted according to the first loss value.

In a reasoning stage of the target model:

A data pair $< t_q, s_q >$ formed by a query text and query voice, and a candidate image $< v_g >$ in a candidate image data set are inputted, a feature $f_q^{txt}$ of a query text $v_q$ is extracted through the text feature extraction unit of the target model, a feature $f_q^{sou}$ of query voice $s_q$ is extracted through the voice feature extraction unit of the target model, a feature $f_g^{voi}$ when the candidate image $v_g$ is aligned with the query voice is extracted through the voice modality alignment unit $s_q$, and a feature $f_g^{vis}$ when the candidate image $v_g$ is aligned with the query text $t_q$ is extracted through the text modality alignment unit.

A Euclidean distance matrix between the query voice $s_q$ and the candidate image $v_g$ is calculated as follows:

$$D_{s2i} = dist(f_q^{sou}, f_g^{voi})$$

, a target image set corresponding to the query voice $s_q$ is determined from the candidate image data set according to the Euclidean distance matrix $D_{s2i}$, and corresponding $CMC_{s2i}$ and $mAP_{s2i}$ are calculated according to the Euclidean distance matrix $D_{s2i}$.

A Euclidean distance matrix between the query text $t_q$ and the candidate image $v_g$ is calculated as follows:

$$D_{t2i} = dist(f_q^{txt}, f_g^{vis})$$

, a target image set corresponding to the query text $t_q$ is determined from the candidate image data set according to the Euclidean distance matrix $D_{t2i}$, and corresponding $CMC_{t2i}$ and $mAP_{t2i}$ are calculated according to the Euclidean distance matrix $D_{t2i}$.

A combined Euclidean distance matrix between the data pair $< t_q,s_q >$ formed by the query text and the query voice and the candidate image $v_g$ is calculated as follows: $D_{st2i} = \lambda\cdot, + (1 - \lambda)\cdot D_{t2i}$, a target image set corresponding to the data pair $< t_q,s_q >$ is determined from the candidate image data set according to the Euclidean distance matrix $D_{st2i}$, and corresponding $CMC_{st2i}$ and $mAP_{st2i}$ are calculated according to the combined Euclidean distance matrix $Ds_{t2i}$.

Finally, the target image set corresponding to the query voice $s_q$, the target image set corresponding to the query text $t_q$, and the target image set corresponding to the data pair $< t_q,s_q >$ are merged, to obtain an image query result.

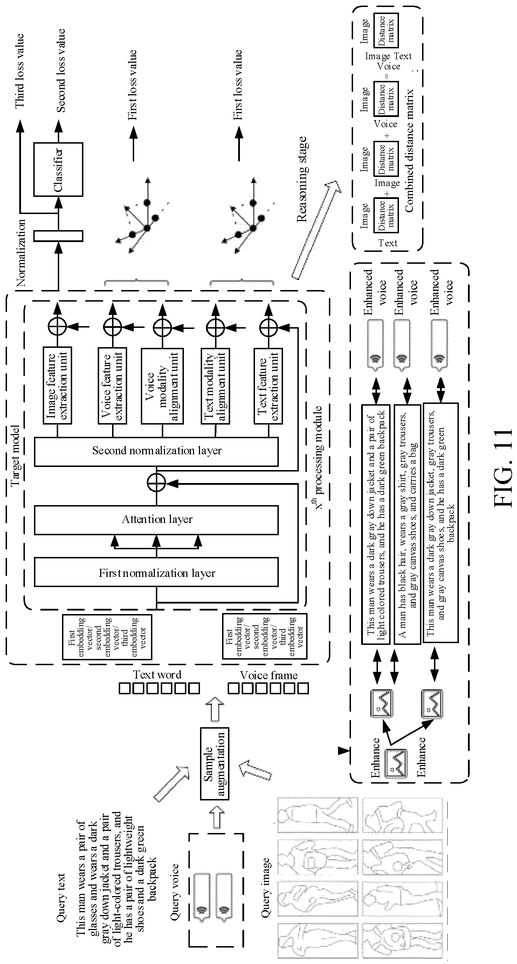

In addition, referring to FIG. 11, FIG. 11 is another optional schematic diagram of an overall architecture of a target model according to an embodiment of this disclosure. The target model includes a first normalization layer, an attention layer, a second normalization layer, an image feature extraction unit, a text feature extraction unit, a text modality alignment unit, a voice modality alignment unit, and a voice feature extraction unit.

In a training stage of the target model:

A plurality of data pairs formed by the sample voice, the sample image, and the sample text are inputted. For the inputted sample text, reference may be made to the example shown in FIG. 7. Details are not described herein again. The inputted sample image is a character image, and the inputted sample voice is voice for describing a character in the sample text. Intra-class voice, text, and image augmentation are performed. For details, reference may be made to the descriptions in the foregoing examples, which is not described herein again. The data pairs are encoded to obtain a text embedding vector, a voice embedding vector, and an image embedding vector. The text embedding vector, the voice embedding vector, and the image embedding vector are inputted into the target model, and normalization by the first normalization layer, attention feature extraction by the attention layer, and normalization by the second normalization layer are performed to obtain a text normalized vector, a voice normalized vector, and an image normalized vector. According to a corresponding input type, feed forward mapping is performed on the image normalized vector through the image feature extraction unit to obtain an image feature of the sample image, feed forward mapping is performed on the text normalized vector through the text feature extraction unit to obtain an image feature of the sample text, feed forward mapping is performed on the voice normalized vector through the voice feature extraction unit to obtain a voice feature of the sample voice, feed forward mapping is performed on the image normalized vector through the voice modality alignment unit to obtain an image feature of the sample image after the sample image is aligned with the sample voice, and feed forward mapping is performed on the image normalized vector through the text modality alignment unit to obtain an image feature of the sample image when the sample image is aligned with the sample text. Next, the first loss value is calculated based on the voice feature of the sample voice and the image feature of the sample image after the sample image is aligned with the sample voice, and the text feature of the sample text and the image feature of the sample image when the sample image is aligned with the sample text, the second loss value and the third loss value are calculated based on the image feature of the sample image, and the parameter of the target model is adjusted according to the first loss value, the second loss value, and the third loss value.

In a reasoning stage of the target model:

A data pair $< v_q,t_q,s_q >$ formed by a query image, a query text, and query voice, and a candidate image $< v_g >$ in a candidate image data set are inputted, a feature $f_q^{img}$ of a query image $v_q$ and a feature $f_g^{img}$ of a candidate image $v_g$ are obtained through the image feature extraction unit of the target model, a feature $f_q^{txt}$ of a query text $v_q$

is extracted through the text feature extraction unit of the target model, a feature $f_q^{sou}$ of query voice $s_q$ is extracted through the voice feature extraction unit of the target model, a feature $f_g^{voi}$ when the candidate image $v_g$ is aligned with the query voice is extracted through the voice modality alignment unit $s_q$, and a feature $f_g^{vis}$ when the candidate image $v_g$ is aligned with the query text $t_q$ is extracted through the text modality alignment unit.

A Euclidean distance matrix between the query image $v_q$ and the candidate image $v_g$ is calculated as follows:

$$D_{i2i} = dist(f_q^{img}, f_g^{img})$$

, a target image set corresponding to the query image $v_q$ is determined from the candidate image data set according to the Euclidean distance matrix $D_{i2i}$, and corresponding $CMC_{i2i}$ and $mAP_{i2i}$ are calculated according to the Euclidean distance matrix $D_{i2i}$.

A Euclidean distance matrix between the query voice $s_q$ and the candidate image $v_g$ is calculated as follows:

$$D_{s2i} = dist(f_q^{sou}, f_g^{voi})$$

, a target image set corresponding to the query voice $s_q$ is determined from the candidate image data set according to the Euclidean distance matrix $D_{s2i}$, and corresponding $CMC_{s2i}$ and $mAP_{s2i}$ are calculated according to the Euclidean distance matrix $D_{s2i}$.

A Euclidean distance matrix between the query text $t_q$ and the candidate image $v_g$ is calculated as follows:

$$D_{t2i} = dist(f_q^{txt}, f_g^{vis})$$

, a target image set corresponding to the query text $t_q$ is determined from the candidate image data set according to the Euclidean distance matrix $D_{t2i}$, and corresponding $CMC_{t2i}$ and $mAP_{t2i}$ are calculated according to the Euclidean distance matrix $D_{t2i}$.

A combined Euclidean distance matrix between the data pair $< v_q, t_q >$ formed by the query image and the query text and the candidate image $v_g$ is calculated as follows: $D_{ti2i} = \lambda \cdot D_{i2i} + (1 - \lambda) \cdot D_{t2i}$, a target image set corresponding to the data pair $< v_q, t_q >$ is determined from the candidate image data set according to the Euclidean distance matrix $D_{ti2i}$, and corresponding $CMC_{ti2i}$ and $mAP_{ti2i}$ are calculated according to the combined Euclidean distance matrix $D_{ti2i}$.

A combined Euclidean distance matrix between the data pair $< v_q, s_q >$ formed by the query image and the query voice and the candidate image $v_q$ is calculated as follows: $D_{si2i} = \lambda \cdot D_{i2i} + (1 - \lambda) \cdot D_{s2i}$, a target image set corresponding to the data pair $< v_q, s_q >$ is determined from the candidate image data set according to the Euclidean distance matrix $D_{si2i}$, and corresponding $CMC_{si2i}$ and $mAP_{si2i}$ are calculated according to the combined Euclidean distance matrix $D_{si2i}$.

A combined Euclidean distance matrix between the data pair $< t_q, s_q >$ formed by the query text and the query voice and the candidate image $v_g$ is calculated as follows: $D_{st2i} = \lambda \cdot D_{s2i} + (1 - \lambda) \cdot D_{t2i}$, a target image set corresponding to the data pair $< t_q, s_q >$ is determined from the candidate image data set according to the Euclidean distance matrix $D_{st2i}$, and corresponding $CMC_{st2i}$ and $mAP_{st2i}$ are calculated according to the combined Euclidean distance matrix $Ds_{t2i}$.

A combined Euclidean distance matrix between the data pair $< v_q, t_q, s_q >$ formed by the query image, the query text, and the query voice and the candidate image $v_g$ is calculated as follows: $D_{sti2i} = \lambda_1 \cdot D_{i2i} + \lambda_2 \cdot, + (1 - \lambda_1 - \lambda_2) \cdot D_{s2i}$, a target image set corresponding to the data pair $< v_q, t_q, s_q >$ is determined from the candidate image data set according to the Euclidean distance matrix $D_{sti2i}$, and corresponding $CMC_{sti2i}$ and $mAP_{sti2i}$ are calculated according to the combined Euclidean distance matrix $D_{sti2i}$.

Finally, the target image set corresponding to the query image $v_q$, the target image set corresponding to the query voice $s_q$, the target image set corresponding to the query text $t_q$, the target image set corresponding to the data pair $< v_q, t_q >$, the target image set corresponding to the data pair $< v_q, s_q >$, the target image set corresponding to the data pair $< t_q, s_q >$, and the target image set corresponding to the data pair $< v_q, t_q, s_q >$ are merged, to obtain an image query result.

$\lambda$, $\lambda_1$, and $\lambda_2$ represent weight values.

An application scenario of the image query method provided in the embodiments of this disclosure is described below by using two practical examples.

Scenario 1

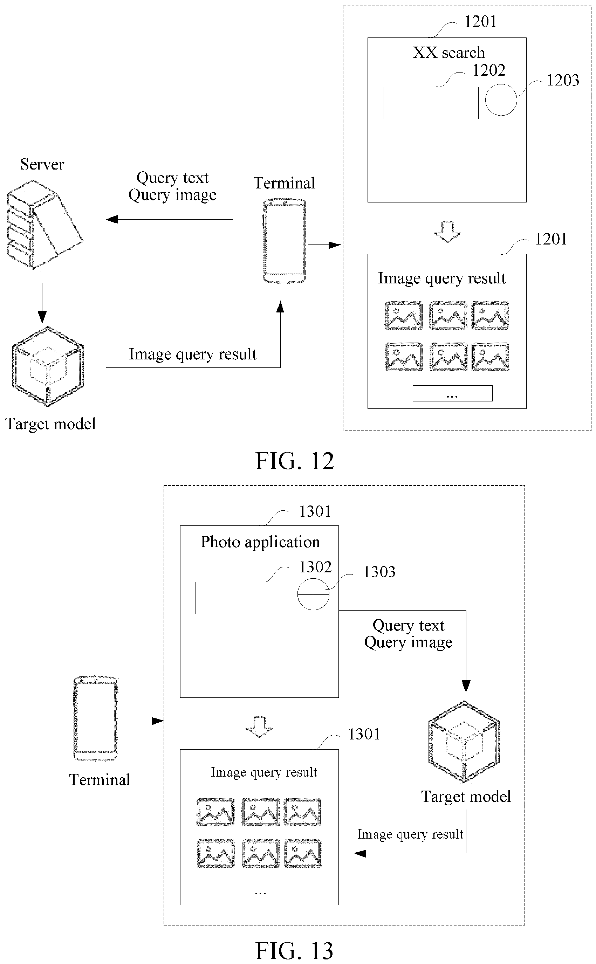

The image query method provided in the embodiments of this disclosure may be applied to a search engine. For example, refer to FIG. 12. FIG. 12 is a schematic flowchart of performing image query by using a search engine according to an embodiment of this disclosure. The terminal displays a search engine search interface 1201. The search engine search interface 1201 displays a first text input box 1202 for inputting a query text and a first image input control 1203 for inputting a query image. The terminal may send the query text inputted from the first text input box 1202 and the query image inputted from the first image input control 1203 to the server. Based on the query text and the query image, the server uses the image query method to determine an image query result from a preset image database and sends the image query result to the terminal. The image query result is displayed on the search engine search interface 1201 of the terminal.

Scenario 2

The image query method provided in the embodiments of this disclosure may be applied to the photo application. For example, refer to FIG. 13. FIG. 13 is a schematic flowchart of performing image query on a photo application according to an embodiment of this disclosure. The terminal displays a photo search interface of the photo application. 1301. The photo search interface 1301 displays a second text input box 1302 for inputting a query text and a second image input control 1303 for inputting a query image. The terminal obtains the query text inputted from the second text input box 1302 and the query image inputted from the second image input control 1303, determines an image query result a photo database of the terminal based on the query text and the query image by using the image query method, and displays the image query result on the photo search interface 1301.

It may be understood that although the steps in the flowchart are sequentially shown according to indication of an arrow, the steps are not necessarily sequentially performed according to a sequence indicated by the arrow. Unless clearly specified in this embodiment, there is no strict sequence limitation on the execution of the steps, and the steps may be performed in another sequence. In addition, at least some steps in the flowcharts may include a plurality of steps or a plurality of stages. The steps or the stages are not necessarily performed at the same moment, but may be performed at different moments. The steps or the stages are not necessarily performed in sequence, but may be performed in turn or alternately with another step or at least some of steps or stages of another step.

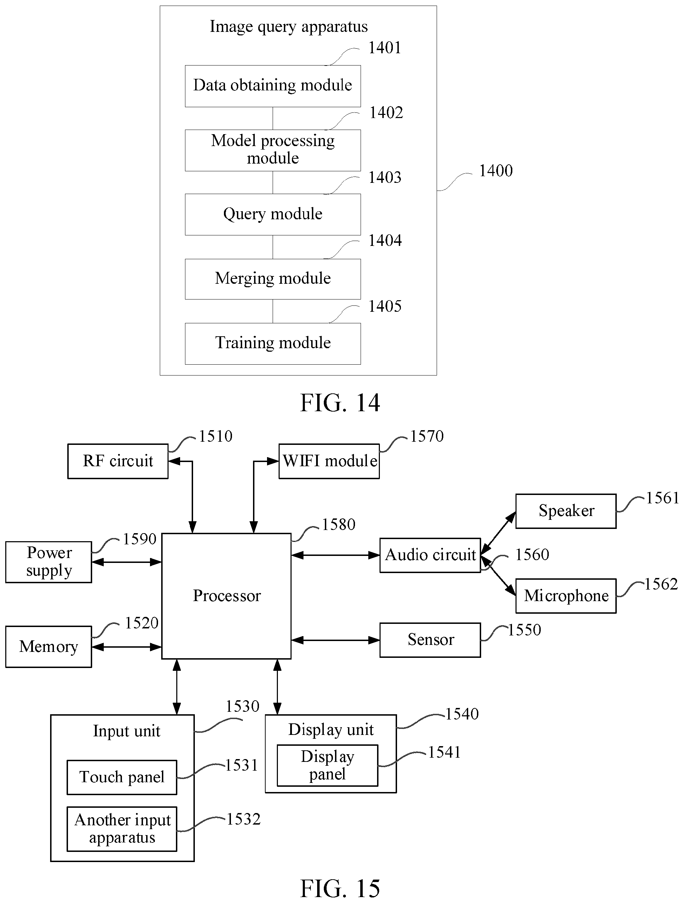

Refer to FIG. 14. FIG. 14 is an optional schematic structural diagram of an image query apparatus according to an embodiment of this disclosure.

In some embodiments, the image query apparatus 1400 is applicable to the electronic device.

In some embodiments, the image query apparatus 1400 includes:

a data obtaining module 1401, configured to obtain a candidate image set and query data in a plurality of modalities, the candidate image set including a plurality of candidate images;

a model processing module 1402, configured to perform feature extraction on the query data based on a target model, to obtain a plurality of first features respectively in the plurality of modalities; for each of the plurality of candidate images, perform feature extraction on the respective candidate image based on the target model, to obtain a plurality of second features when the respective candidate image is aligned with the query data respectively in the plurality of modalities;

a query module 1403, configured to for each of the plurality of candidate images, determine a plurality of first similarities between the respective candidate image and the query data according to the plurality of first features and the plurality of second features respectively in the plurality of modalities; determine a plurality of query data combinations, each of the plurality of query data combinations comprising query data in at least one modality; for the each query data combination, determine, from the candidate image set, a target image set according to the plurality of first similarities, the target image set comprising at least one target image; and

a merging module 1404, configured to merge a plurality of target image sets to obtain an image query result.

Further, the model processing module 1402 is further configured to: for each of the plurality of modalities,

convert the query data in the respective modality into a query embedding vector, wherein query embedding vectors of the plurality of modalities are in the same vector format; and

input the query embedding vector into the target model, and perform feature mapping on the query data based on the target model, to obtain a first feature of the query data in the respective modality.

Further, the model processing module 1402 is further configured to:

segment the query data to obtain a plurality of query data blocks, and perform feature mapping on the plurality of query data blocks to obtain a first embedding vector;

determine location information of each of the plurality of query data blocks in the query data, and perform feature mapping on a plurality of pieces of location information to obtain a second embedding vector;

perform feature mapping on the respective modality, to obtain a third embedding vector; and

concatenate the first embedding vector, the second embedding vector, and the third embedding vector, to obtain the query embedding vector.

Further, the model processing module 1402 is further configured to:

normalize the query embedding vector, to obtain a first normalized vector;

perform attention feature extraction on the first normalized vector, to obtain an attention vector; and

perform feature mapping on the attention vector based on the target model, to obtain the first feature of the query data in the respective modality.

Further, the model processing module 1402 is further configured to:

concatenate the attention vector and the query embedding vector, to obtain a concatenated vector;

normalize the concatenated vector, to obtain a second normalized vector;

perform feed forward feature mapping on the second normalized vector based on the target model, to obtain a mapping vector; and

concatenate the mapping vector and the concatenated vector, to obtain the first feature of the query data in the respective modality.

Further, the query data in the plurality of modalities includes a query text and a query image, the target model includes a text modality alignment unit that is configured to align the candidate image with the query text and an image feature extraction unit that is configured to perform feature extraction on the query image. The model processing module 1402 is further configured to:

perform, based on the text modality alignment unit, feature extraction on the respective candidate image, to obtain a second feature of the candidate image when the candidate image is aligned with the query text; and

perform, based on the image feature extraction unit, feature extraction on the respective candidate image, to obtain a second feature of the candidate image when the candidate image is aligned with the query image.

Further, the query module 1403 is further configured to:

combine the plurality of first similarities to obtain a target similarity;

determine a target image set from the candidate image set according to the target similarity.

Further, the image query apparatus further includes a training module 1405. The training module 1405 is configured to:

obtain a sample image, and sample query data in at least one modality other than an image modality;

determine a similarity tag between the sample image and the sample query data;

perform feature extraction on the sample query data based on the target model, to obtain a third feature of the sample query data;

perform feature extraction on the sample image based on the target model, to obtain at least one fourth feature of the sample image when the sample image is aligned with the sample query data respectively in the at least one modality;

determine a second similarity between the sample image and the sample query data according to the third feature and the at least one fourth feature;

determine a first loss value according to the second similarity and the similarity tag; and

adjust a parameter of the target model according to the first loss value.

Further, the training module 1405 is further configured to:

obtain a category tag of the sample image;

perform feature extraction on the sample image based on the target model, to obtain a fifth feature of the sample image in the image modality;

classify the sample image according to the fifth feature, to obtain a sample category;

determine a second loss value according to the sample category and the category tag; and

adjust the parameter of the target model according to the first loss value and the second loss value.

Further, the training module 1405 is further configured to:

obtain a first reference image that is of the same category as the sample image and a second reference image that is of a different category from the sample image;

perform feature extraction on the sample image, the first reference image, and the second reference image based on the target model, to respectively obtain a fifth feature of the sample image in the image modality, a sixth feature of the first reference image, and a seventh feature of the second reference image;

determine a third similarity between the fifth feature and the sixth feature and a fourth similarity between the fifth feature and the seventh feature, and determine, a third loss value according to the third similarity and the fourth similarity; and

adjust, the parameter of the target model according to the first loss value and the third loss value.

Further, the training module 1405 is further configured to:

obtain an initial image and an initial text;

perform enhancement processing on the initial image, to obtain an enhanced image;

delete a text component of any length in the initial text to obtain an enhanced text, or adjust a text component in the initial text by using a text component in a reference text to obtain an enhanced text, wherein the reference text is of the same category as the initial text; and

use the initial image and the enhanced image as sample images, and use the initial text and the enhanced text as the sample texts.

The image query apparatus 1400 is based on the same inventive concept as the image query method. The image query apparatus 1400 performs feature extraction on the query data through the target model to obtain a first feature of the query data, and then performs feature extraction on the candidate image through the same target model for a plurality of times to obtain a second feature of the candidate image when the candidate image is aligned with query data in each modality, which can improve image query accuracy by using query data in a plurality of modalities, and unify feature frameworks of the query data in the plurality of modalities and the candidate image, thereby improving feature space consistency between the first feature and the second feature. Moreover, the server determines the first feature and the second feature by using the same target model, which can reduce a quantity of parameters of the target model, and reduce memory overheads for deploying the target model. In addition, only the same target model needs to be trained in a training stage, which improves model training efficiency. Based on the above, the server determines a first similarity between the candidate image and query data in each modality according to the first feature and the second feature, determines target image sets corresponding to a plurality of query data combinations from the candidate image set according to the first similarity, and merges a plurality of target image sets to obtain an image query result. In this way, there is no need to retrieve the query data and the candidate images in a one-to-one manner, so that image query efficiency is effectively improved. In addition, the image query result is obtained based on the target image sets corresponding to the plurality of query data combinations, which can effectively improve image query accuracy.

The electronic device that is provided in the embodiments of this disclosure and that is configured to perform the image query method may be a terminal. Refer to FIG. 15. FIG. 15 is a block diagram of a structure of a part of a terminal according to an embodiment of this disclosure. The terminal includes components such as a radio frequency (RF) circuit 1510, a memory 1520, an input unit 1530, a display unit 1540, a sensor 1550, an audio circuit 1560, a wireless fidelity (Wi-Fi) module 1570, a processor 1580, and a power supply 1590. A person skilled in the art may understand that the terminal structure shown in FIG. 15 does not constitute a limitation on the terminal, and may include more or fewer components than shown, or combine some components, or have different component arrangements.

The RF circuit 1510 may be configured to send and receive a signal in an information receiving and sending process or a call process, and in particular, after downlink information of a base station is received, send the downlink information to the processor 1580 for processing. In addition, the RF circuit transmits uplink data to the base station.

The memory 1520 may be configured to store a software program and module. The processor 1580 runs the software program and module stored in the memory 1520, to implement various functional applications and data processing of the terminal.

The input unit 1530 may be configured to receive input digit or character information, and generate key signal input related to the setting and function control of the terminal. Specifically, the input unit 1530 may include a touch panel 1531 and another input apparatus 1532.

The display unit 1540 may be configured to display inputted information or provided information, and various menus of the terminal. The display unit 1540 may include a display panel 1541.

The audio circuit 1560, a speaker 1561, and a microphone 1562 may provide audio interfaces.

In this embodiment, the processor 1580 included in the terminal may perform the image query method in the foregoing embodiments.

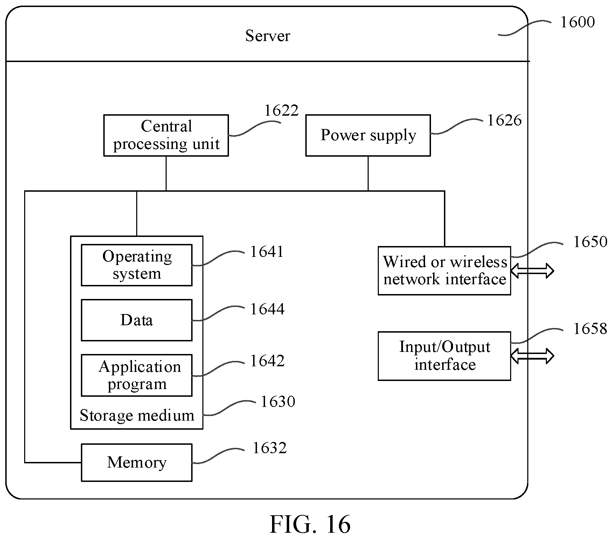

The electronic device provided in the embodiments of this disclosure and configured to perform the image query method may be a server. Refer to FIG. 16. FIG. 16 is a block diagram of a structure of a part of a server according to an embodiment of this disclosure. The server 1600 may vary greatly due to different configurations or performance, and may include one or more central processing units (CPU) 1622 (for example, one or more processors) and a memory 1632, and one or more storage media 1630 (for example, one or more mass storage devices) that store an application program 1642 or data 1644. The memory 1632 and the storage mediums 1630 may be used for transient storage or permanent storage. The programs stored in the storage media 1630 may include one or more modules (not shown in the figure), and each module may include a series of instructions to the server 1600. Furthermore, the central processing unit 1622 may be configured to communicate with the storage medium 1630 to perform the series of instruction operations in the storage medium 1630 on the server 1600.

The server 1600 may further include one or more power supplies 1626, one or more wired or wireless network interfaces 1650, one or more input/output interfaces 1658, and/or, one or more operating systems 1641, for example, Windows ServerTM, Mac OS XTM, UnixTM, LinuxTM, and FreeBSDTM.

The processor in the server 1600 may be configured to perform the image query method.

An embodiment of this disclosure further provides a computer-readable storage medium, configured to store a program code, the program code being used for performing the image query method according to the foregoing embodiments.

An embodiment of this disclosure further provides a computer program product, the computer program product including a computer program, the computer program being stored in a computer-readable storage medium. A processor of a computer device reads the computer program from the computer-readable storage medium, and the processor executes the computer program, to enable the computer device to perform the image query method.

The terms such as "first", "second", "third", and "fourth" (if any) in the specification and accompanying drawings of this disclosure are used for distinguishing similar objects and not necessarily used for describing any particular order or sequence. Data used in this way is interchangeable in a suitable case, so that the embodiments of this disclosure described herein can be implemented in a sequence in addition to the sequence shown or described herein. Moreover, the terms "include", "contain", and any other variants thereof mean to cover the non-exclusive inclusion. For example, a process, method, system, product, or apparatus that includes a list of steps or units is not necessarily limited to those steps or units that are clearly listed, but may include other steps or units not expressly listed or inherent to such a process, method, system, product, or apparatus.

It may be understood that, in this disclosure, "at least one (item)" refers to one or more, and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items" or a similar expression means any combination of these items, including a single item or any combination of a plurality of items. For example, at least one of a, b, or c may indicate a, b, c, "a and b", "a and c", "b and c", or "a, b, and c", where a, b, and c may be singular or plural.

It may be understood that, "a plurality of (items)" means more than two, "greater than", "less than", "exceeding", and the like in the embodiments of this disclosure are understood as not including the current number, and "above", "below", "within" and the like are understood as including the current number.

In the several embodiments provided in this disclosure, the disclosed system, apparatus, and method may be implemented in other manners. For example, the described apparatus embodiments above are merely exemplary. For example, the unit division is merely logical function division and there may be other division manners during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts can or cannot be physically separate. Parts displayed as units can or cannot be physical units, and can be located in one position, or can be distributed on a plurality of network units. Some or all of the units may be selected according to actual requirements to achieve the objectives of the solutions of the embodiments.

In addition, functional units in the embodiments of this disclosure may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this disclosure essentially, or the part contributing to the related technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this disclosure. The foregoing storage medium includes various media capable of storing program codes, such as, a USB flash drive, a mobile hard disk, a Read Only Memory (ROM), a Random Access Memory (RAM), a magnetic disk, or an optical disc.

It may be further understood that, the implementations provided in the embodiments of this disclosure may be randomly combined to achieve different technical effects.

The exemplary embodiments of this disclosure are described in detail above. However, this disclosure is not limited to the foregoing implementations. A person skilled in the art may also make various equivalent modifications or replacements, and these equivalent modifications or replacements shall fall within the scope defined by claims of this disclosure.

**Claims**

1. An image query method, executable by an electronic device, and comprising:

    obtaining a candidate image set and query data in a plurality of modalities, the candidate image set comprising a plurality of candidate images;
    performing feature extraction on the query data based on a target model, to obtain a plurality of first features respectively in the plurality of modalities;
    for each of the plurality of candidate images,

        performing feature extraction on the respective candidate image based on the target model, to obtain a plurality of second features when the respective candidate image is aligned with the query data respectively in the plurality of modalities;

determining a plurality of first similarities between the respective candidate image and the query data according to the plurality of first features and the plurality of second features respectively in the plurality of modalities;

determining a plurality of query data combinations, each of the plurality of query data combinations comprising query data in at least one modality;
for the each query data combination, determining, from the candidate image set, a target image set according to the plurality of first similarities, the target image set comprising at least one target image; and
merging a plurality of target image sets to obtain an image query result.

2. The image query method according to claim 1, wherein the performing feature extraction on the query data based on a target model, to obtain a plurality of first features respectively in the plurality of modalities comprises:
for each of the plurality of modalities,

converting the query data in the respective modality into a query embedding vector, wherein query embedding vectors of the plurality of modalities are in the same vector format; and
inputting the query embedding vector into the target model, and performing feature mapping on the query data based on the target model, to obtain a first feature of the query data in the respective modality.

3. The image query method according to claim 1, wherein the query data in the plurality of modalities comprises a query text and a query image,

the target model comprises a text modality alignment unit and an image feature extraction unit, and
the performing feature extraction on the respective candidate image based on the target model, to obtain a plurality of second features when the respective candidate image is aligned with the query data respectively in the plurality of modalities comprises:

performing, based on the text modality alignment unit, feature extraction on the respective candidate image, to obtain a second feature of the candidate image when the candidate image is aligned with the query text; and
performing, based on the image feature extraction unit, feature extraction on the respective candidate image, to obtain a second feature of the candidate image when the candidate image is aligned with the query image.

4. The image query method according to claim 1, wherein the for the each query data combination, determining, from the candidate image set, a target image set according to the plurality of first similarities comprises:

combining the plurality of first similarities to obtain a target similarity;
determining a target image set from the candidate image set according to the target similarity.

5. The image query method according to claim 2, wherein the converting the query data in the respective modality into a query embedding vector comprises:

segmenting the query data to obtain a plurality of query data blocks, and performing feature mapping on the plurality of query data blocks to obtain a first embedding vector;
determining location information of each of the plurality of query data blocks in the query data, and performing feature mapping on a plurality of pieces of location information to obtain a second embedding vector;
performing feature mapping on the respective modality, to obtain a third embedding vector; and
concatenating the first embedding vector, the second embedding vector, and the third embedding vector, to obtain the query embedding vector.

6. The image query method according to claim 2, wherein the performing feature extraction on the query data based on a target model, to obtain a first feature of the query data in the respective modality comprises:

normalizing the query embedding vector, to obtain a first normalized vector;
performing attention feature extraction on the first normalized vector, to obtain an attention vector; and
performing feature mapping on the attention vector based on the target model, to obtain the first feature of the query data in the respective modality.

7. The image query method according to claim 6, wherein the performing feature mapping on the attention vector based on the target model, to obtain the first feature of the query data in the respective modality comprises:

concatenating the attention vector and the query embedding vector, to obtain a concatenated vector;
normalizing the concatenated vector, to obtain a second normalized vector;
performing feed forward feature mapping on the second normalized vector based on the target model, to obtain a mapping vector; and
concatenating the mapping vector and the concatenated vector, to obtain the first feature of the query data in the respective modality.

8. The image query method according to any one of claims 1 to 7, further comprising:

obtaining a sample image, and sample query data in at least one modality other than an image modality;
determining a similarity tag between the sample image and the sample query data;
performing feature extraction on the sample query data based on the target model, to obtain a third feature of the sample query data;
performing feature extraction on the sample image based on the target model, to obtain at least one fourth feature of the sample image when the sample image is aligned with the sample query data respectively in the at least one modality;
determining a second similarity between the sample image and the sample query data according to the third feature and the at least one fourth feature;
determining a first loss value according to the second similarity and the similarity tag; and
adjusting a parameter of the target model according to the first loss value.

9. The image query method according to claim 8, wherein the adjusting a parameter of the target model according to the first loss value comprises:

obtaining a category tag of the sample image;
performing feature extraction on the sample image based on the target model, to obtain a fifth feature of the sample image in the image modality;
classifying the sample image according to the fifth feature, to obtain a sample category;
determining a second loss value according to the sample category and the category tag; and
adjusting the parameter of the target model according to the first loss value and the second loss value.

10. The image query method according to claim 8, wherein the adjusting a parameter of the target model according to the first loss value comprises:

obtaining a first reference image that is of the same category as the sample image and a second reference image that is of a different category from the sample image;
performing feature extraction on the sample image, the first reference image, and the second reference image based on the target model, to respectively obtain a fifth feature of the sample image in the image modality, a sixth feature of the first reference image, and a seventh feature of the second reference image;
determining a third similarity between the fifth feature and the sixth feature and a fourth similarity between the fifth feature and the seventh feature, and determining, a third loss value according to the third similarity and the fourth similarity; and
adjusting, the parameter of the target model according to the first loss value and the third loss value.

11. The image query method according to claim 8, wherein the sample query data comprises sample texts, and the obtaining a sample image, and sample query data in at least one modality other than an image modality comprises:

obtaining an initial image and an initial text;
performing enhancement processing on the initial image, to obtain an enhanced image;
deleting a text component of any length in the initial text to obtain an enhanced text, or adjusting a text component in the initial text by using a text component in a reference text to obtain an enhanced text, wherein the reference text is of the same category as the initial text; and
using the initial image and the enhanced image as sample images, and using the initial text and the enhanced text as the sample texts.

**12.** An image query apparatus, comprising:

a data obtaining module, configured to obtain a candidate image set and query data in a plurality of modalities, the candidate image set comprising a plurality of candidate images;

a model processing module, configured to perform feature extraction on the query data based on a target model, to obtain a plurality of first features respectively in the plurality of modalities; for each of the plurality of candidate images, perform feature extraction on the respective candidate image based on the target model, to obtain a plurality of second features when the respective candidate image is aligned with the query data respectively in the plurality of modalities;

a query module, configured to for each of the plurality of candidate images, determine a plurality of first similarities between the respective candidate image and the query data according to the plurality of first features and the plurality of second features respectively in the plurality of modalities; determine a plurality of query data combinations, each of the plurality of query data combinations comprising query data in at least one modality; for the each query data combination, determine, from the candidate image set, a target image set according to the plurality of first similarities, the target image set comprising at least one target image; and

a merging module, configured to merge a plurality of target image sets to obtain an image query result.

**13.** An electronic device, comprising a memory and a processor, the memory storing a computer program, and the processor, when executing the computer program, implementing the image query method according to any one of claims 1 to 11.

**14.** A computer-readable storage medium, storing a computer program, the computer program, when executed by a processor, implementing the image query method according to any one of claims 1 to 11.

**15.** A computer program product, comprising a computer program, the computer program, when executed by a processor, implementing the image query method according to any one of claims 1 to 11.

Candidate image set

Candidate image

101

Query data

102

Target model

Align

Align

Align

Candidate image

Second feature

Second feature

Second feature

First similarity

First similarity

First similarity

First feature

First feature

First feature

Query data

Image query result

FIG. 1

201

An electronic device obtains a candidate image set and query data in a plurality of modalities

202

The electronic device performs feature extraction on the query data based on a target model, to obtain a plurality of first features respectively in the plurality of modalities; for each of the plurality of candidate images, the electronic device performs feature extraction on the respective candidate image based on the target model, to obtain a plurality of second features when the respective candidate image is aligned with the query data respectively in the plurality of modalities

203

For each of the plurality of candidate images, the electronic device a plurality of first similarities between the respective candidate image and the query data according to the plurality of first features and the plurality of second features respectively in the plurality of modalities; the electronic device determines a plurality of query data combinations, each of the plurality of query data combinations comprising query data in at least one modality; and for the each query data combination, the electronic device determines, from the candidate image set, a target image set according to the plurality of first similarities, the target image set comprising at least one target image

204

The electronic device merges a plurality of result image sets to obtain an image query result

FIG. 2

FIG. 3

FIG. 4

Target model

Query embedding vector

Image embedding vector

First normalization layer

Attention layer

Second normalization layer

Feature extraction unit

Feature extraction unit

...

Modality alignment unit

Modality alignment unit

...

FIG. 5

First/second reference image

Third loss value

Target model

Sample image

Image feature extraction unit

Sample image

Text modality alignment unit

Sample text

Text feature extraction unit

Fifth feature

Classifier

Image category

Second loss value

Fourth feature

Third feature

} First loss value

FIG. 6

Delete a text
component

This man wears a dark gray down jacket
and has a dark green backpack / This man
wears a dark gray down jacket and a pair of
light colored trousers

Add a text
component in a
reference text

This man wears a dark gray down jacket,
gray trousers, and gray canvas shoes, and he
has a dark green backpack / This man
wears a dark gray down jacket and a pair of
light colored trousers, has black hair, and he
has a dark green backpack

Sample text

...

This man wears a dark gray down jacket
and a pair of light colored trousers, and he
has a dark green backpack

Initial text

Flip

Crop

Zoom in

Color
dithering

Initial image

Sample image

FIG. 7

Query text

This man wears a pair of glasses and wears a dark gray down jacket and a pair of light-colored trousers, and he has a pair of lightweight shoes and a dark green backpack

Sample augmentation

Query image

Text word

Image block

First embedding vector/ second embedding vector/third embedding vector

First embedding vector/ second embedding vector/third embedding vector

Target model

First normalization layer

Attention layer

Second normalization layer

Image feature extraction unit

Text modality alignment unit

Text feature extraction unit

$x^{th}$ processing module

Normalization

Classifier

Third loss value

Second loss value

First loss value

Reasoning stage

Enhance

Enhance

This man wears a dark gray down jacket and a pair of light colored trousers, and he has a dark green backpack

A man has black hair, wears a gray shirt, gray trousers, and gray canvas shoes, and carries a bag

This man wears a dark gray down jacket, gray trousers, and gray canvas shoes, and he has a dark green backpack

Image

Text | Distance matrix

Image | + | Image | Distance matrix

Image | = | Image Text | Distance matrix

Combined distance matrix

FIG. 8

Query voice

Query image

Sample augmentation

Voice frame

First embedding vector/ second embedding vector/ third embedding vector

Image block

First embedding vector/ second embedding vector/ third embedding vector

Target model

First normalization layer

Attention layer

Second normalization layer

Image feature extraction unit

Voice modality alignment unit

Voice feature extraction unit

x$^{th}$ processing module

Normalization

Classifier

Third loss value

Second loss value

First loss value

Reasoning stage

Enhance

Enhance

Enhanced voice

Enhanced voice

Enhanced voice

Image

Voice | Distance matrix | + Image | Distance matrix | = Image Voice | Distance matrix

Combined distance matrix

FIG. 9

FIG. 10

Query text

This man wears a pair of glasses and wears a dark gray down jacket and a pair of light-colored trousers, and he has a pair of lightweight shoes and a dark green backpack

Query voice

Query image

Sample augmentation

Text word

Voice frame

Target model

First embedding vector/ second embedding vector/ third embedding vector

First embedding vector/ second embedding vector/ third embedding vector

First normalization layer

Attention layer

Second normalization layer

Image feature extraction unit

Voice feature extraction unit

Voice modality alignment unit

Text modality alignment unit

Text feature extraction unit

$x^{th}$ processing module

Normalization

Classifier

Third loss value

Second loss value

First loss value

First loss value

Reasoning stage

Enhance

Enhance

This man wears a dark gray down jacket and a pair of light colored trousers, and he has a dark green backpack

A man has black hair, wears a gray shirt, gray trousers, and gray canvas shoes, and carries a bag

This man wears a dark gray down jacket, gray trousers, and gray canvas shoes, and he has a dark green backpack

Enhanced voice

Enhanced voice

Enhanced voice

Image

Image

Image

Image

Text

Distance matrix

Image

Distance matrix

Voice

Distance matrix

Image Text Voice

Distance matrix

Combined distance matrix

FIG. 11

1201

XX search

1202

1203

Query text
Query image

Server

Terminal

Image query result

Target model

1201

Image query result

...

FIG. 12

1301

Photo application

1302

1303

Query text
Query image

Terminal

Target model

Image query result

1301

Image query result

...

FIG. 13

Image query apparatus

Data obtaining module ⌐ 1401

Model processing module ⌐ 1402

Query module ⌐ 1403

Merging module ⌐ 1404

Training module ⌐ 1405

⌐ 1400

FIG. 14

RF circuit ⌐1510

WIFI module ⌐1570

Speaker ⌐1561

Power supply ⌐1590

Processor ⌐1580

Audio circuit

1560

Microphone ⌐1562

Memory ⌐1520

Sensor ⌐1550

Input unit ⌐1530

Touch panel ⌐1531

Another input apparatus ⌐1532

Display unit ⌐1540

Display panel ⌐1541

FIG. 15

FIG. 16

## INTERNATIONAL SEARCH REPORT

| | International application No. |
|---|---|
| | **PCT/CN2023/107962** |

**A.    CLASSIFICATION OF SUBJECT MATTER**

G06F 16/583(2019.01)i;  G06F 16/538(2019.01)i;  G06F 16/532(2019.01)i;  G06V 10/40(2022.01)i;  G06V 10/74(2022.01)i;  G06V 10/774(2022.01)i

According to International Patent Classification (IPC) or to both national classification and IPC

**B.    FIELDS SEARCHED**

Minimum documentation searched (classification system followed by classification symbols)

IPC:G06F G06V

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 图, 文, 检索, 搜索, 查找, 查询, 对齐, 映射, 模态, 格式, 投影, 空间, 统一, graph, text, retrieve, search, find, query, align, map, modality, format, projection, space, unified

**C.    DOCUMENTS CONSIDERED TO BE RELEVANT**

| Category* | Citation of document, with indication, where appropriate, of the relevant passages | Relevant to claim No. |
|---|---|---|
| X | CN 114780777 A (SHANGHAI ADVANCED RESEARCH INSTITUTE, CHINESE ACADEMY OF SCIENCES) 22 July 2022 (2022-07-22)<br>    description, paragraphs [0002]-[0189] | 1-15 |
| A | CN 112966127 A (NORTH MINZU UNIVERSITY) 15 June 2021 (2021-06-15)<br>    entire document | 1-15 |
| A | CN 113157739 A (PING AN TECHNOLOGY (SHENZHEN) CO., LTD.) 23 July 2021 (2021-07-23)<br>    entire document | 1-15 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 October 2023** | **09 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/107962**

| Patent document cited in search report | | | Publication date (day/month/year) | Patent family member(s) | | | Publication date (day/month/year) |
|---|---|---|---|---|---|---|---|
| CN | 114780777 | A | 22 July 2022 | CN | 114780777 | B | 20 December 2022 |
| CN | 112966127 | A | 15 June 2021 | CN | 112966127 | B | 20 May 2022 |
| CN | 113157739 | A | 23 July 2021 | None | | | |

Form PCT/ISA/210 (patent family annex) (July 2022)

**REFERENCES CITED IN THE DESCRIPTION**

**Patent documents cited in the description**

- CN 202211089620